# EUROPEAN PATENT APPLICATION

(11) **EP 4 845 207 A1**
(43) Date of publication of application: **25.11.2026**
(21) Application number: 25741463.1
(22) Date of filing: 13.01.2025
(51) Int. Cl.: H04W 24/10

(54) **INFORMATION REPORTING METHOD AND APPARATUS, TERMINAL, AND NETWORK SIDE DEVICE**

(30) Priority: 17.01.2024 CN 202410069135; 05.03.2024 CN 202410250525
(71) Applicant: Vivo Mobile Communication Co., Ltd., Dongguan, Guangdong 523863 (CN)
(72) Inventor: WANG, Chenxi, Dongguan, Guangdong 523863 (CN); CHEN, Xiaohang, Dongguan, Guangdong 523863 (CN); LI, Na, Dongguan, Guangdong 523863 (CN)
(74) Representative: Conti, Marco
(86) International application number: PCT/CN2025/072102
(87) International publication number: WO 2025/152902

(57) **Abstract**

This application discloses an information reporting method and apparatus, a terminal, and a network-side device, pertaining to the field of communication technologies. The information reporting method in embodiments of this application includes: determining, by a terminal, a first target uplink resource; and reporting, by the terminal, first reporting information based on the first target uplink resource, where the first reporting information is triggered for reporting by the terminal, or a first measurement associated with the first reporting information is triggered by the terminal.

## Description

### CROSS-REFERENCE TO RELATED APPLICATIONS

This application claims priority to the entire content of Chinese Patent Application No. 202410069135.7 filed in China on January 17, 2024, and priority to part of the content of Chinese Patent Application No. 202410250525.4 filed in China on March 5, 2024, which are incorporated herein by reference.

### TECHNICAL FIELD

This application pertains to the field of communication technologies, and specifically relates to an information reporting method and apparatus, a terminal, and a network-side device.

### BACKGROUND

In some related measurement reporting mechanisms, measurement and reporting are usually triggered by a network-side device. For example, a terminal measures a reference signal configured by a network side, and then performs necessary reporting on all uplink resources configured or indicated by the network side. However, not all measurements and reporting triggered by the network-side device are necessary for the terminal, which may result in some unnecessary measurements or reporting, leading to relatively high power consumption of the terminal.

### SUMMARY

Embodiments of this application provide an information reporting method and apparatus, a terminal, and a network-side device, so as to solve the problem of relatively high power consumption of a terminal.

According to a first aspect, an information reporting method is provided, including:
determining, by a terminal, a first target uplink resource; and
reporting, by the terminal, first reporting information based on the first target uplink resource, where the first reporting information is triggered for reporting by the terminal, or a first measurement associated with the first reporting information is triggered by the terminal.

According to a second aspect, an information reporting method is provided, including:
receiving, by a network-side device, first reporting information reported by a terminal based on the first target uplink resource, where the first reporting information is triggered for reporting by the terminal, or a first measurement associated with the first reporting information is triggered by the terminal.

According to a third aspect, an information reporting apparatus is provided, including:
a determining module configured to determine a first target uplink resource; and
a first reporting module configured to report first reporting information based on the first target uplink resource, where the first reporting information is triggered for reporting by a terminal, or a first measurement associated with the first reporting information is triggered by the terminal.

According to a fourth aspect, an information reporting apparatus is provided, including:
a first receiving module configured to receive first reporting information reported by a terminal based on the first target uplink resource, where the first reporting information is triggered for reporting by the terminal, or a first measurement associated with the first reporting information is triggered by the terminal.

According to a fifth aspect, a terminal is provided. The terminal includes a processor and a memory, where the memory stores a program or instructions capable of running on the processor, and the program or instructions, when executed by the processor, implement the steps of the information reporting method on the terminal side according to the embodiments of this application.

According to a sixth aspect, a terminal is provided, including a processor and a communication interface, where the processor is configured to determine a first target uplink resource; and the communication interface is configured to report first reporting information based on the first target uplink resource, where the first reporting information is triggered for reporting by the terminal, or a first measurement associated with the first reporting information is triggered by the terminal.

According to a seventh aspect, a device is provided. The device includes a processor and a memory, where the memory stores a program or instructions capable of running on the processor, and the program or instructions, when executed by the processor, implement the steps of the information reporting method on the network-side device side according to the embodiments of this application.

According to an eighth aspect, a device is provided, including a processor and a communication interface, where the communication interface is configured to receive first reporting information reported by a terminal based on the first target uplink resource, where the first reporting information is triggered for reporting by the terminal, or a first measurement associated with the first reporting information is triggered by the terminal.

According to a ninth aspect, a readable storage medium is provided, where a program or instructions are stored on the readable storage medium, and the program or instructions, when executed by a processor, implement the steps of the information reporting method on the terminal side according to the embodiments of this application, or implement the steps of the information reporting method on the network-side device side according to the embodiments of this application.

According to a tenth aspect, a wireless communication system is provided, including: a terminal and a network-side device, where the terminal may be configured to perform the steps of the information reporting method on the terminal side according to the embodiments of this application, and the network-side device may be configured to perform the steps of the information reporting method on the network-side device side according to the embodiments of this application.

According to an eleventh aspect, a chip is provided. The chip includes a processor and a communication interface, where the communication interface is coupled to the processor, and the processor is configured to run a program or instructions to implement the information reporting method on the terminal side according to the embodiments of this application, or to implement the steps of the information reporting method on the network-side device side according to the embodiments of this application.

According to a twelfth aspect, a computer program/program product is provided, where the computer program/program product is stored in a storage medium, and the program/program product is executed by at least one processor to implement the steps of the information reporting method on the terminal side according to the embodiments of this application, or the program/program product is executed by at least one processor to implement the steps of the information reporting method on the network-side device side according to the embodiments of this application.

In the embodiments of this application, a terminal determines a first target uplink resource; and the terminal reports first reporting information based on the first target uplink resource, where the first reporting information is triggered for reporting by the terminal, or a first measurement associated with the first reporting information is triggered by the terminal. In this way, since the information reporting or the first measurement is triggered by the terminal, unnecessary measurements or reporting can be avoided or reduced, thereby reducing power consumption of the terminal and saving transmission resources.

### BRIEF DESCRIPTION OF DRAWINGS

FIG. 1a is a block diagram of a wireless communication system to which embodiments of this application are applicable;
FIG. 1b is a schematic diagram of signal mapping according to an embodiment of this application;
FIG. 2 is a flowchart of an information reporting method according to an embodiment of this application;
FIG. 3 is a flowchart of another information reporting method according to an embodiment of this application;
FIG. 4 is a structural diagram of an information reporting apparatus according to an embodiment of this application;
FIG. 5 is a structural diagram of another information reporting apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, objects distinguished by "first" and "second" are generally of a same type, and the quantities of the objects are not limited, for example, there may be one or more target objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

The term "indication" in this application may be a direct indication (or explicit indication) or an indirect indication (or implicit indication). A direct indication may be understood as a sender explicitly informing a receiver of content such as specific information, an operation to be performed, or a request result in a sent indication; an indirect indication may be understood as a receiver determining corresponding information based on an indication sent by a sender, or making a judgment and determining an operation to be performed, a request result, or the like based on a judgment result.

It should be noted that technologies described in the embodiments of this application are not limited to a long term evolution (Long Term Evolution, LTE)/LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other systems than an NR system, for example, a 6^{th} generation (6^{th} Generation, 6G) communication system.

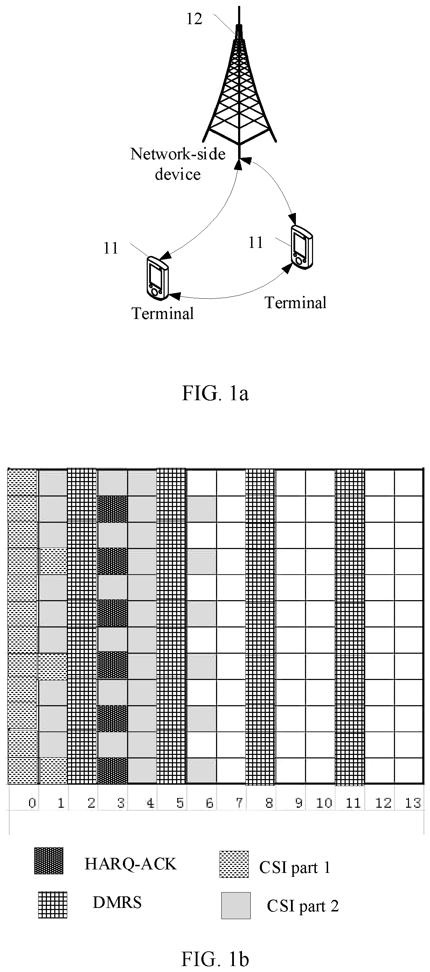

FIG. 1a is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, a self-service machine, an internet of things (Internet of Things, IoT) device, or an ambient internet of things (Ambient IoT, A-IoT) device. The wearable device includes a smartwatch, a smart band, smart earphones, smart glasses, smart jewelry (a smart bangle, a smart bracelet, a smart ring, a smart necklace, a smart leglet, a smart anklet, and the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, and the like. It should be noted that the terminal 11 is not limited to a specific type in the embodiments of this application.

The network-side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other suitable terms in the field. Provided that the same technical effect is achieved, the base station is not limited to specific technical terms. It should be noted that in the embodiments of this application, only the base station in the NR system is used as an example for description, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function unit (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is used as an example for description, but a specific type of the core network device is not limited.

For ease of understanding, the following describes some content in the embodiments of this application.

### About beam measurement

Analog beamforming employs full-bandwidth transmission, and each polarization direction element on each high-frequency antenna array panel can transmit analog beams only in a time-division multiplexing manner. A beamforming weight of an analog beam is implemented by adjusting a parameter of a device such as a radio frequency front-end phase shifter.

Currently in academia and industry, analog beamforming vectors are typically trained by polling. To be specific, elements in each polarization direction on each antenna panel sequentially transmit training signals (that is, candidate beamforming vectors) at an agreed time in a time-division multiplexing manner. After measurement, a terminal feeds back a beam report for a network side to use the training signals to implement analog beam transmission in a next service transmission.

In the related art, beam measurement is supported only through a channel state information reference signal (Channel State Information-Reference Signal, CSI-RS) or a synchronization signal/physical broadcast channel signal block (or synchronization signal block) (Synchronization Signal and PBCH block, SSB), where the CSI-RS for beam measurement has only one or two ports. The SSB is a periodic reference signal, while the CSI-RS for beam measurement may be periodic, semi-persistent, or aperiodic.

Beam measurement is classified into layer 1 (L1) beam measurement and layer 3 (L3) beam measurement, where L1 beam measurement in protocol releases 15 and 16 is limited to serving cells. Release 15 only supports L1 reference signal received power (Reference Signal Received Power, RSRP) measurement, and Release 16 introduces L1 signal to interference plus noise ratio (Signal to Interference plus Noise Ratio, SINR), having inter-cell interference or inter-user interference considered in beam measurement. In protocol release 17, the cross-cell beam management and cross-cell multiple transmission reception point project supports L1 beam measurement for a neighboring cell that is on a same frequency as and synchronized with a current serving cell, and protocol release 18 mobility enhancement project supports L1 beam measurement for a neighboring cell that is asynchronous with and on a different frequency from a current serving cell, both of which currently support only SSB-based L1-RSRP measurement. Based on a reporting mechanism triggered by a network-side device, after performing L1 beam measurement based on a measurement resource configured by the network-side device, a terminal selects, based on measurement result, a beam for reporting.

### About beam reporting

In a current protocol, a reporting measurement quantity supported for an L1 beam report triggered by a network-side device is L1-RSRP/L1 reference signal received quality (Reference Signal Received Quality, RSRQ)/L1-SINR, and beam reporting manners include group-based and non-group-based. For non-group-based beam reporting, based on the reporting measurement quantity, a terminal selects a maximum of four beams from all measurement resources configured by the network side and associated with the L1 beam report for reporting. For group-based beam reporting, in Release 15/16, the terminal selects, based on the reporting measurement quantity, a pair of beams that can be simultaneously received by the UE for reporting.

In the protocol, if a report quantity (report quantity) field in a higher layer parameter CSI report configuration (CSI Report Config) is set to "cri-RSRP", "cri-SINR", "ssb-Index-SINR", or "ssb-Index-RSRP", it indicates that a current CSI report is a beam report. Moreover, in a case that a groupBasedBeamReporting (groupBasedBeamReporting) field is enabled ("enabled"), the UE can report only one pair of beams: including two channel measurement resource (Channel Measurement Resource, CMR) identifiers and their corresponding L1-RSRP/L1-SINR values, where the CMR identifier includes a channel state information-reference signal resource indicator (CSI-RS Resource Indicator, CRI) or an SSB resource indicator (SSB resource indicator, SSBRI). In a case that the groupBasedBeamReporting field is disabled ("disabled"), the UE may report CMR identifiers corresponding to four beams and their corresponding L1-RSRP values. In a case that the number of reported beams is greater than 1, all L1-RSRP/L1-SINR values except the maximum value of L1-RSRP/L1-SINR are reported differentially relative to the maximum value. The specific uplink control information (Uplink Control Information, UCI) mapping rules (for L1-RSRP) for CSI reporting are shown in Table 1 and Table 2, and the mapping rules for L1-SINR follow the same principle. It should be noted that a CRI/SSBRI position corresponds to an RSRP position, CRI/SSBRI #1 corresponds to RSRP#1, and RSRP#1 is the maximum value among the four RSRPs.

**Table 1 UCI mapping order for L1 beam reporting in Release 15/16**

| CSI report number | CSI fields |
|---|---|
| | CRI or SSBRI #1 as in Table 2, if reported |
| | CRI or SSBRI #2 as in Table 2, if reported |
| | CRI or SSBRI #3 as in Table 2, if reported |
| CSI report #n | CRI or SSBRI #4 as in Table 2, if reported |
| | RSRP #1 as in Table 2, if reported |
| | Differential RSRP #2 as in Table 2, if reported |
| | Differential RSRP #3 as in Table 2, if reported |
| | Differential RSRP #4 as in Table 2, if reported |

**Table 2 UCI bit overhead**

| Field | Bitwidth |
|---|---|
| CRI | $\left⌈{log}_{2}\left({K}_{s}^{CSI - RS}\right)\right⌉$ |
| SSBRI | $\left⌈{log}_{2}\left({K}_{s}^{SSB}\right)\right⌉$ |
| RSRP | 7 |
| Differential RSRP | 4 |

The numbers of UCI bits of the reference signal RS identifier and L1-RSRP are shown in Table 2. Similar rules apply to L1-SINR. ${K}_{s}^{CSI - RS}$ is the number of CSI-RS resources configured in one CSI-RS resource set (CSI-RS resource set), ${K}_{s}^{SSB}$ is the number of SSB resources configured in one SSB resource set (SSB resource set). Current protocols support up to 64 RS resources configured in one RS (CSI-RS/SSB) set.

In the multiple transmission reception point project of Release 17, group-based beam reporting is enhanced. A terminal can select, from the measurement resources configured by the network, a maximum of four pairs of beams that can be simultaneously received by the UE for reporting. Different beams in each pair of beams that can be simultaneously received correspond to different transmission reception points, thereby ensuring that the network can simultaneously transmit this pair of beams. The corresponding UCI mapping is shown in Table 3.

**Table 3 UCI mapping order for L1 beam reporting in Release 17**

| CSI report number | CSI fields |
|---|---|
| CSI report #n | Resource set indicator |
| | CRI or SSBRI #1 of 1st resource group as in Table 2, if reported |
| | CRI or SSBRI #2 of 1st resource group as in Table 2, if reported |
| | CRI or SSBRI #1 of 2nd resource group as in Table 2, if reported |
| | CRI or SSBRI #2 of 2nd resource group as in Table 2, if reported |
| | CRI or SSBRI #1 of 3rd resource group as in Table 2, if reported |
| | CRI or SSBRI #2 of 3rd resource group as in Table 2, if reported |
| | CRI or SSBRI #1 of 4th resource group as in Table 2, if reported |
| | CRI or SSBRI #2 of 4th resource group as in Table 2, if reported |
| | RSRP of CRI or SSBRI #1 of 1st resource group as in Table 2 |
| | Differential RSRP of CRI or SSBRI #2 of 1st resource group as in Table 2 |
| | Differential RSRP of CRI or SSBRI #1 of 2nd resource group as in Table 2, if reported |
| | Differential RSRP of CRI or SSBRI #2 of 2nd resource group as in Table 2, if reported |
| | Differential RSRP of CRI or SSBRI #1 of 3rd resource group as in Table 2, if reported |
| | Differential RSRP of CRI or SSBRI #2 of 3rd resource group as in Table 2, if reported |
| | Differential RSRP of CRI or SSBRI #1 of 4th resource group as in Table 2, if reported |
| | Differential RSRP of CRI or SSBRI #2 of 4th resource group as in Table 2, if reported |

In the Release 18 layer 1 or layer 2 triggered mobility (L1/L2-Triggered Mobility, LTM) project, L1 reporting for handover is introduced, namely ltm-CSI-ReportConfig. In one L1 report for handover, the terminal can report a maximum of 4 cells, where each cell reports 4 beam measurement results, that is, a maximum of 16 beams and their corresponding measurement results.

### About CSI report priority

In CSI reporting, in a case that reporting resources corresponding to multiple CSI reports overlap in time domain, the terminal separately calculates priority evaluation values of the multiple CSI reports according to a CSI report priority formula. A smaller priority evaluation value of a CSI report indicates a higher priority of the CSI report. Then, the terminal performs sorting and UCI mapping based on priorities of the CSI reports. When the reporting resource cannot carry the multiple CSI reports, the low-priority CSI report is discarded. The CSI report priority formula is specifically as follows: ${Pri}_{CSI} \left(y, k, c, s\right) = 2 ⋅ {N}_{cells} ⋅ {M}_{s} ⋅ y + {N}_{cells} ⋅ {M}_{s} ⋅ k + {M}_{s} ⋅ c + s ,$ where
for an aperiodic CSI report reported on a physical uplink shared channel (Physical Uplink Shared Channel, PUSCH), y=0; for a semi-persistent CSI report reported on a PUSCH, y=1; for a semi-persistent CSI report reported on a physical uplink control channel (Physical Uplink Control Channel, PUCCH), y=2; for a CSI report reported on a PUCCH, y=3;
for a CSI report with a reporting measurement quantity of L1-RSRP or L1-SINR, k=0; otherwise, k=1;
c is a serving cell index associated with a CSI report;
*N_{cells}* is a value of a radio resource control (Radio Resource Control, RRC) parameter maximum number of configurable serving cells (maxNrofServingCells);
s is a CSI report configuration identifier (CSI-ReportConfigId); and
*Mₛ* is a value of an RRC parameter maximum number of configurable CSI report configurations (maxNrofCSI-ReportConfigurations).

An LTM report (or referred to as an LTM-CSI report, or an LTM CSI report) introduced in the Release 18 LTM project determines a UCI sequence and resource mapping as CSI information. When a resource collision occurs, a priority of the LTM report is always higher than that of a CSI report.

### About UCI reporting on PUCCH

UCI reporting on PUCCH over a single slot (UCI reporting on PUCCH over a single slot) may include the following:
A UCI sequence reported on a PUCCH includes six cases: HARQ-ACK only (HARQ-ACK only), SR only (SR only), CSI only (CSI only), HARQ-ACK and SR, HARQ-ACK and CSI, as well as HARQ-ACK, SR, and CSI.

In a case that PUCCH resources carrying different UCI sequences and having the same priority indication overlap, the terminal behavior may specifically include the following.

Step 1: The terminal determines an overlapping PUCCH set according to a rule, where the PUCCH set needs to satisfy one of the following conditions:
an interval between the 1st symbol of all PUCCH resources carrying HARQ-ACK information in the PUCCH set and the last symbol of all PDSCHs corresponding to the HARQ-ACK information carried in the PUCCH set is not less than a PDSCH processing time of the terminal;
an interval between the 1st symbol of all PUCCH resources carrying HARQ-ACK information in the PUCCH set and the last symbol of all PDCCHs corresponding to the HARQ-ACK information carried in the PUCCH set is not less than an SPS PDSCH release processing time; and
unconditional.

Step 2: Determine, based on the PUCCH set, a PUCCH resource for multiplex transmission of all UCIs, and perform transmission.

In a case that a PUCCH carrying a HARQ-ACK/SR corresponding to an SPS PDSCH overlaps with two PUCCH resources carrying different CSI reports, the terminal chooses to multiplex the HARQ-ACK/SR onto the PUCCH carrying the high-priority CSI report for transmission, and does not transmit the PUCCH carrying the low-priority CSI report.

Collision handling between PUCCH for HARQ-ACK and PUCCH for SR (Table 4): In a case that HARQ-ACK and SR are transmitted on PUCCH format 2/3, the terminal determines the minimum number of PRBs required for actual transmission based on lengths of HARQ-ACK, SR, and CRC, where the minimum number of PRBs is not greater than the number of PRBs configured by the network side for the PUCCH resource.

Collision handling between PUCCH for CSI and PUCCH for SR: For CSI transmitted on PUCCH format 2/3/4, negative SR (negative) or positive SR (positive SR) represented by bits arranged in ascending order of schedulingRequestResourceId values may be added before a P/SP CSI information bit, or only wideband CSI (wideband CSI) is transmitted on PUCCH format 2.

Collision handling between PUCCH for CSI and PUCCH for HARQ-ACK: In a case that the network configures only one PUCCH resource set for transmitting HARQ-ACK corresponding to a PDSCH scheduled by PDCCH or corresponding to a PDCCH used to release an SPS PDSCH, the terminal does not expect to be configured with a simultaneous HARQ-ACK-CSI (simultaneousHARQ-ACK-CSI). For other cases, the rules are shown in Table 5.

**Table 4 HARQ-ACK and SR (F indicates a PUCCH format, and a resource in [] is a transmission resource)**

| | F0 HARQ-ACK | F1 HARQ-ACK | F2/F3/F4 HARQ-ACK |
|---|---|---|---|
| F0 SR | Positive SR+[HARQ-ACK] | [HARQ-ACK] (drop SR, and send only HARQ-ACK) | SR+ [HARQ-ACK] (transmit on a HARQ-ACK PUCCH, and add 1-bit SR after an HARQ-ACK information bit) |
| | - When positive SR is transmitted on a HARQ-ACK PUCCH, a different cyclic shift is used. | | |
| F1 SR | TBD | [positive SR]+HARQ-ACK | |
| | | - transmit a HARQ-ACK on an SR PUCCH | |
| K SR configurations | Positive SR+[HARQ-ACK] | [K F1 positive SR] + HARQ-ACK | SR+[HARQ-ACK] (transmit an SR on a HARQ-ACK, and add a negative or positive SR (all 0s) represented by *log*₂(*K* + 1) bits arranged in ascending order of schedulingRequestReso urceId values after an HARQ-ACK information bit) |
| | - transmit an SR on a HARQ-ACK PUCCH, using a different CS | - transmit a HARQ-ACK on K F1 SR PUCCHs | |

**Table 5 HARQ-ACK and CSI (F indicates a PUCCH format, and a resource in [] is a transmission resource)**

| | HARQ-ACK for PDSCH without PDCCH | HARQ-ACK for PDSCH with PDCCH |
|---|---|---|
| CSI on multi-CSI-PUCCH-ResourceList (number of PUCCH resources not greater than 2) | HARQ-ACK+[CSI] | |
| | - If the 2nd PUCCH resource cannot carry HARQ-ACK, CSI, and CRC bits, N CSI reports are selected based on a CSI report priority for reporting. | |
| CSI part I | | [HARQ-ACK]+CSI part I (HARQ-ACK resource determined based on a payload size of HARQ-ACK+CSI (the number of bits of CSI part 2 when RI=1) and a PUCCH resource indicator field in DCI) |
| | | - If a PUCCH resource cannot carry HARQ-ACK, CSI, and CRC bits, N CSI reports are selected based on a CSI report priority for reporting. |
| CSI (including part I and II) | | [HARQ-ACK]+CSI (HARQ-ACK resource determined based on a payload size of HARQ-ACK+CSI (the number of bits of CSI part 2 when RI=1) and a PUCCH resource indicator field in DCI) |
| | | - In addition to HARQ-ACK and CSI part I, if a PUCCH resource can also carry CSI part II, N CSI parts II are selected based on a CSI report priority for reporting; otherwise, all CSI parts II are dropped. |

In a case that a PUCCH resource carrying a UCI sequence and a PUSCH (including carrying or not carrying UL-SCH data) resource that share a same priority indication overlap, the terminal behavior may specifically be as follows.

Solution 1: In a case that a PUSCH not carrying UL-SCH data overlaps with a PUCCH carrying positive SR, the terminal does not send the PUSCH.

Solution 2: In a case that a PUSCH carrying aperiodic or semi-persistent CSI overlaps with a PUCCH carrying HARQ-ACK/SR, the terminal does not send the PUSCH.

### Solution 3:

Step 1: In a case that the PUCCH resource and the PUSCH resource satisfy the following conditions, the terminal multiplexes the UCI sequence onto the PUSCH for transmission:
an interval between the 1st symbol of the PUSCH resource and the last symbol of all PDSCHs corresponding to the PUSCH resource is not less than a PDSCH processing time of the terminal;
an interval between the 1st symbol of the PUSCH resource and the last symbol of all PDCCHs corresponding to the PUSCH resource is not less than an SPS PDSCH release processing time;
an interval between the 1st symbol of the PUSCH resource and the last symbol of all PDCCHs corresponding to the PUSCH resource is not less than a CSI calculation time of the terminal; and
an interval between the 1st symbol of the PUSCH resource and the last symbol of all PDCCHs corresponding to the PUSCH resource is not less than a PUSCH preparation time of the terminal.

Step 1-1: In a case that the conditions in Step 1 are satisfied, if the PUCCH overlaps with multiple PUSCHs,
the terminal selects a network-scheduled PUSCH, or
the terminal selects a PUSCH in a cell with the smallest serving cell index, or
in a case that there is a PUSCH in a cell with the smallest serving cell index, the earliest PUSCH in a current slot is selected.

Step 2: Multiplex UCI onto the PUSCH according to the following rules:
in a case that the PUCCH carries HARQ-ACK, SR, and CSI, and the PUSCH carries or multiplexes aperiodic CSI or semi-persistent CSI, the terminal multiplexes only the HARQ-ACK in the UCI carried in the PUCCH onto the PUSCH, and does not send the SR;
in a case that the PUCCH carries HARQ-ACK and SR, and the PUSCH does not carry or multiplex aperiodic CSI or semi-persistent CSI, the terminal multiplexes only the HARQ-ACK and CSI in the UCI carried in the PUCCH onto the PUSCH, and does not send the SR; and
in a case that the number of HARQ-ACK bits or the number of bits jointly encoded with CG-UCI/UTO-UCI is greater than 2, a multiplexing resource is determined through rate match;
otherwise, multiplexing onto the PUSCH is performed through puncturing.

UCI reporting on PUCCH with repetition over multiple slots (UCI reporting on PUCCH with repetition over multiple slots) may include the following:
in some cases, only PUCCH format 1, 3, 4 can be configured for repetition (repetition). In a multi-slot PUCCH, the terminal does not expect to transmit different UCI types.

In addition, the method for collision resolution between multi-slot PUCCH/PUCCH and multi-slot PUSCH that have a same priority indication is shown in Table 6.

**Table 6 Multi-slot PUCCH/PUCCH and multi-slot PUSCH**

| | Single-/Multi-slot PUCCH | | Multi-slot PUSCH |
|---|---|---|---|
| | - If the priorities of the carried UCI types are the same, the terminal sends [earlier PUCCH]. | | [PUCCH] |
| | | | In a case that both the PUCCH and the PUSCH satisfy a timing condition, the terminal does not transmit the overlapping PUSCH. |
| Multi-slot PUCCH | - If the priorities of the carried UCI types are different, [PUCCH carrying the higher-priority UCI type] is sent. | | |
| | - UCI type priorities | | |
| | | ■ HARQ-ACK > SR > CSI with higher priority > CSI with lower priority | |

PUCCH/PUSCH prioritization (PUCCH/PUSCH prioritization) may include the following:
Considering that one UE may support different services simultaneously, and different services correspond to different service requirements, such as latency and reliability, a mechanism for marking the priority of PUCCH/PUSCH channels is introduced. Specifically, two levels of physical layer priority are introduced, that is, high priority and low priority. For example, the priorities of SR, CG PUSCH, SPS PDSCH, and its release HARQ-ACK are configured through RRC signaling. P-CSI or SP-CSI on PUCCH is considered as low priority. For HARQ-ACK of the dynamically scheduled PDSCH, DG PUSCH, A-CSI/SP-CSI on PUSCH, or the like, the priority is indicated by a 1-bit field in the corresponding scheduling DCI. The priority of the PUCCH is determined by its carried HARQ-ACK/SR/CSI. In a case that time-domain resources of different channels overlap, if they have the same priority, they are processed according to the multiplexing rule defined by the protocol; if they have different priorities, the UE drops the low-priority channel and transmits the high-priority channel. If there are both channels with the same priority and channels with different priorities, the UE first processes the channels with the same priority according to the multiplexing rule defined by the protocol, and then processes the channels with different priorities. Additionally, when processing the channels with different priorities, the UE requires a certain processing time to drop low-priority channels and transmit high-priority channels. The drop/cancel time requirements for the UE to process channels with different priorities are defined in the protocol.

UCI reporting and multiplex on PUSCH (UCI reporting and multiplex on PUSCH) may include the following:
The UCI sequence reported on the PUSCH includes six cases: HARQ-ACK only, CSI only, CG-UCI only, UTO-UCI only, HARQ-ACK and CG-UCI, HARQ-ACK and UTO-UCI. In addition to carrying UCI information, the PUSCH carries data from UL-SCH. In some cases, except for the PUSCH used for carrying aperiodic CSI reporting and the PUSCH carrying a 1st semi-persistent CSI report, other PUSCHs can carry data from UL-SCH.

In a case that a PUSCH carrying semi-static CSI overlaps with a PUSCH carrying UL-SCH data, the terminal does not transmit the PUSCH carrying semi-static CSI.

In a case that UCI is multiplexed onto a physical uplink shared channel, HARQ-ACK is mapped to a 1st position after a 1st DMRS symbol, CSI part 1 is mapped to a 1st non-DMRS position of the PUSCH, and CSI part 2 starts mapping from an RE after CSI part 1. The number of REs occupied by different types of UCI on a PUSCH may be determined based on a corresponding beta_offset, where beta_offset may be determined by network configuration or dynamic indication. A specific mapping order of PUSCH resources is (HARQ-ACK or HARQ-ACK and CG-UCI/UTO-UCI or CG-UCI/UTO-UCI, CSI part 1, CSI part 2, data). The mapping relationship (UCI includes only HARQ-ACK and CSI) may be as shown in FIG. 1b.

The following describes an information reporting method and apparatus, and a device according to embodiments of this application in detail with reference to the accompanying drawings through some embodiments and application scenarios thereof.

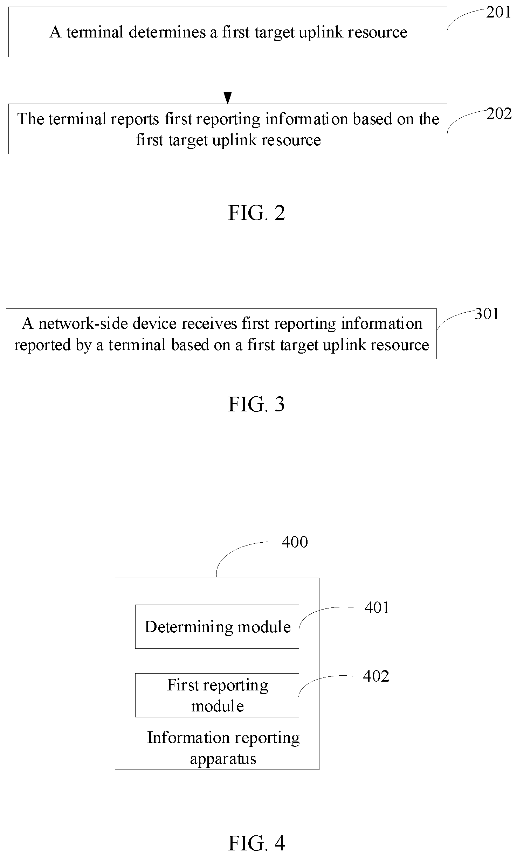

Referring to FIG. 2, FIG. 2 is a flowchart of an information reporting method according to an embodiment of this application. As shown in FIG. 2, the method includes the following steps.

Step 201: A terminal determines a first target uplink resource; where
the first target uplink resource may be a first target uplink resource determined by the terminal in a periodic or semi-static uplink resource, or may be a first target uplink resource determined in an uplink resource dynamically scheduled by a network side.

For example, Step 201 may include at least one of the following:
determining the first target uplink resource based on the periodic uplink resource configured by the network side, such as determining the first target uplink resource in a periodic physical uplink control channel (Physical Uplink Control Channel, PUCCH) or a type 1 configured grant (Configured Grant, CG) resource;
determining the first target uplink resource based on the semi-static uplink resource activated by the network side, for example, including determining the first target uplink resource in a physical uplink shared channel (Physical Uplink Shared Channel, PUSCH) for semi-persistent (Semi-Persistent, SP) channel state information (Channel State Information, CSI) and a type 2 CG resource; and
determining a target uplink resource based on an uplink resource dynamically scheduled by the network side, for example, determining the first target uplink resource in a PUSCH for aperiodic channel state information (Aperiodic CSI, AP CSI) (PUSCH for AP CSI) and a dynamically scheduled grant (grant) resource.

That a terminal determines a first target uplink resource may be understood as: the terminal selectively determines the first target uplink resource, thereby determining to report information based on the first target uplink resource. For example, for multiple uplink resources used for reporting, the terminal may select all or some of the uplink resources as the first target uplink resource.

Step 202: The terminal reports first reporting information based on the first target uplink resource, where the first reporting information is triggered for reporting by the terminal, or a first measurement associated with the first reporting information is triggered by the terminal.

The reporting first reporting information may be reporting the first reporting information to a network-side device.

That the terminal reports first reporting information based on the first target uplink resource may be: the terminal reports the first reporting information on the first target uplink resource, or may be: the terminal reports the first reporting information on an uplink resource overlapping with the first target uplink resource.

The first reporting information may be information related to measurement, for example, information related to beam measurement.

That the first reporting information is triggered for reporting by the terminal may be understood as follows: the first reporting information is triggered for reporting by the terminal, that is, the terminal selectively reports the first reporting information. For example, the terminal performs multiple measurements and obtains multiple measurement results, and when the terminal has measurement results satisfying a condition, the terminal selects some of the measurement results as reporting information for reporting.

That a first measurement associated with the first reporting information is triggered by the terminal may be understood as at least one of the following:
the first reporting information is reporting information obtained based on the first measurement, but the first measurement is triggered by the terminal; for example, after triggering the first measurement, the terminal obtains the first reporting information and reports the first reporting information; and
the first reporting information is information used for triggering the first measurement; for example, the terminal triggers the first measurement through the first reporting information.

The first measurement may be a downlink measurement or an uplink measurement.

In the embodiment of this application, through the above steps, information reporting or the first measurement can be triggered by the terminal, which can avoid or reduce unnecessary measurements or reporting, thereby reducing power consumption of terminal, and saving transmission resources. In addition, since the reporting information or the first measurement is triggered by the terminal, selective reporting or measurement by the terminal is implemented, making information reporting and measurement more flexible and better align with terminal requirements.

In an optional implementation, in a case that the first measurement associated with the first reporting information is triggered by the terminal, the first reporting information is obtained based on the first measurement triggered by the terminal.

In this implementation, the terminal may trigger the first measurement, and then the terminal performs the first measurement to obtain the first reporting information, and reports the first reporting information on the first target uplink resource. Since the first measurement is triggered by the terminal, power consumption of the terminal can be reduced, and unnecessary measurements can be avoided or reduced.

In an optional implementation, the first reporting information includes at least one of the following:
indication information indicating that the terminal triggers reporting;
a first report, where the first report includes at least one of the following: a reference signal index, and a measurement result;
indication information for indicating the network-side device to trigger beam measurement and reporting;
indication information of a downlink reference signal;
indication information for triggering uplink beam measurement;
indication information of an uplink reference signal; and
first information.

The indication information indicating that the terminal triggers reporting may indicate that the first reporting information is triggered for reporting by the terminal, for example, may be indicated using 1 bit.

The reference signal index may be an index of a reference signal measured by the terminal.

The reference signal index may include M reference signal indexes, where M is greater than or equal to 1, for example, including at least one of the following:
a synchronization signal block (Synchronization Signal Block, SSB) index, an SSB resource indicator (SSB Resource Indicator, SSBRI), a channel state information reference signal (Channel State Information Reference Signal, CSI-RS) index, and a CSI-RS resource indicator (CSI-RS Resource Indicator, CRI).

The measurement result may include N measurement results, where N is greater than or equal to 1, and a measurement quantity of the N measurement results includes but is not limited to at least one of the following:
a layer 1 reference signal received power (Layer 1 reference signal received power, L1-RSRP), a layer 1 signal to interference plus noise ratio (Layer 1 Signal to Interference plus Noise Ratio, L1-SINR), and a layer 1 reference signal received quality (Layer 1 Reference Signal Received Quality, L1-RSRQ); where
the values of M and N may be equal or unequal.

The indication information for indicating the network-side device to trigger beam measurement and reporting may be used to indicate the network-side device to trigger beam measurement and reporting. In this way, measurement and reporting can be triggered by the terminal through this indication information, because the network-side device performs the triggering based on the indication information sent by the terminal.

The indication information of the downlink reference signal is used to indicate one or more downlink reference signals, or one or more downlink reference signal resources, for example, may include indication information of one or more CSI-RS resources or CSI-RS resource sets. These resources or resource sets are used for downlink beam measurement, for example, including but not limited to at least one of the following:
a CSI-RS resource index;
a CSI-RS resource set index; and
indication information of a time-frequency domain position of a CSI-RS.

Through the indication information of the downlink reference signal, the triggered downlink measurement can be performed based on a signal or resource indicated by the indication information, thereby improving measurement accuracy.

It should be noted that in a case that the first reporting information includes the indication information of the downlink reference signal, downlink beam measurement may be implicitly triggered.

The indication information for triggering uplink beam measurement may be related information used for indicating triggering of uplink beam measurement.

The indication information of the uplink reference signal is used to indicate one or more uplink reference signals, or one or more uplink reference signal resources, for example, may include indication information of one or more sounding reference signal (Sounding Reference Signal, SRS) resources or SRS resource sets. These resources or resource sets are used for uplink beam measurement, including but not limited to:
an SRS resource index;
an SRS resource set index; and
indication information of a time-frequency domain position of an SRS.

Through the indication information of the uplink reference signal, the triggered uplink measurement can be performed based on a signal or resource indicated by the indication information, thereby improving measurement accuracy.

It should be noted that in a case that the first reporting information includes the indication information of the uplink reference signal, uplink beam measurement may be implicitly triggered.

The first information may be beam-related information or measurement-related information.

In some implementations, the first information includes at least one of the following:
a transmission configuration indicator (Transmission Configuration Indicator, TCI) state identifier;
an uplink transmission configuration indicator (Transmission Configuration Indicator Uplink, TCI-UL) state identifier;
a TCI codepoint identifier;
a spatial relation (spatial relation) information;
a reference signal index; and
terminal assistance information.

The reference signal index may include at least one of the following:
a CSI-RS index, an SSB index, a CRI, and an SSBRI.

The terminal assistance information may include a beam change pattern, a terminal moving speed, location information, environment information, or the like.

Reporting the first information makes the measurement more reliable.

In an optional implementation, before the terminal determines the first target uplink resource, the method further includes:
reporting, by the terminal, second reporting information based on a second target uplink resource.

The reporting second reporting information may be reporting the second reporting information to the network-side device.

The second reporting information may be information used for related indication of the first reporting information or the first target uplink resource. The second reporting information may also be used to indicate whether there is first reporting information to be reported.

In some implementations, the second reporting information is a scheduling request dedicated to the terminal-triggered reporting of the first reporting information, and the second target uplink resource is an uplink resource configured by a network side for carrying the second reporting information.

The scheduling request may be a scheduling request triggered by a medium access control (Medium Access Control, MAC) layer or a physical layer.

The uplink resource configured by a network side for carrying the second reporting information may be a periodic PUCCH resource or another uplink resource, such as a PUSCH resource.

The reporting, by the terminal, second reporting information based on a second target uplink resource may be reporting, by the terminal, the second reporting information on the second target uplink resource, or may be reporting, by the terminal, the second reporting information on an uplink resource overlapping with the second target uplink resource.

Since reporting the second reporting information in this way allows the network side to allocate the first target uplink resource for carrying the first reporting information more dynamically and flexibly, network resource utilization can be improved.

Optionally, the first target uplink resource and the second target uplink resource belong to a same channel resource; or
the first target uplink resource and the second target uplink resource belong to different channel resources.

In a case that the first target uplink resource and the second target uplink resource belong to a same channel resource, the first target uplink resource and the second target uplink resource may have entirely the same time-frequency domain positions, or differ in at least one of a time domain position and a frequency domain position.

In this implementation, reporting of the first reporting information and the second reporting information can be implemented using a same or different channel resources, improving flexibility of information reporting.

Optionally, in the implementation of reporting the second reporting information, the first reporting information includes at least one of the following:
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information;
   or
the second reporting information includes at least one of the following:
   indication information indicating that the terminal triggers reporting;
   indication information used for indicating whether the first report exists;
   indication information used for indicating a size of the first report;
   indication information of the first target uplink resource;
   a second report, where the second report includes at least one of the following: a reference signal index, and a measurement result;
   indication information for indicating a network-side device to trigger beam measurement and reporting;
   indication information of a downlink reference signal;
   indication information for triggering uplink beam measurement;
   indication information of an uplink reference signal; and
   first information.

For the content included in the first reporting information, reference may be made to the foregoing implementation. Details are not repeated herein.

The indication information used for indicating whether the first report exists may indicate whether there is the first reporting information to be reported. For example, if a first condition is not satisfied, the first report does not exist; otherwise, the first report exists. For the first condition, reference may be made to the following implementation.

The indication information used for indicating a size of the first report may be related information indicating the size of the first report, for example, including but not limited to the actual number of uplink control information (Uplink Control Information, UCI) bits, and a range indication for the number of UCI bits, such as using 0 to indicate 1 to 10 bits and using 1 to indicate 11 to 20 bits.

The indication information of the first target uplink resource is used to indicate a position of the first target uplink resource. In this way, dynamic allocation of the first target uplink resource can be implemented, and the network-side device receives the first reporting information on only the first target uplink resource, thereby improving resource utilization and reducing power consumption of the network-side device. For example, the indication information of the first target uplink resource may include at least one of the following:
time domain offset information between the first target uplink resource and the second target uplink resource, or time domain position information of the first target uplink resource;
frequency domain offset information between the first target uplink resource and the second target uplink resource, or frequency domain position information of the first target uplink resource; and
an identifier of the first target uplink resource.

The time domain offset information may be a time domain offset value, in the unit of s, ms, frames, subframes, slots, symbols, or the like. The frequency domain offset information may be a frequency domain offset value, in the unit of physical resource blocks (Physical Resource Block, PRB) or resource elements (Resource element, RE).

The identifier of the first target uplink resource may be a PUCCH resource identifier, a configured grant uplink resource identifier (Configured Grant Config Index), or the like.

It should be noted that the first reporting information and the second reporting information may include different information. For example, the first reporting information includes the first report, indication information for indicating the network-side device to trigger beam measurement and reporting, indication information of a downlink reference signal, indication information for triggering uplink beam measurement, indication information of an uplink reference signal, or first information, while the second reporting information does not include such information, which is not specifically limited. In some implementations, they may alternatively include the same type of information, just with different values.

Optionally, the determining, by a terminal, a first target uplink resource includes at least one of the following:
determining, by the terminal, the first target uplink resource in an uplink resource scheduled by the network-side device and dedicated to the first reporting information;
determining, by the terminal, the first target uplink resource in a reporting resource associated with a third report, where the reporting resource associated with the third report is configured, indicated, or activated by the network-side device;
determining, by the terminal, the first target uplink resource based on the second reporting information; and
determining, by the terminal, the first target uplink resource based on a network pre-configured reporting resource; where
the uplink resource scheduled by the network-side device and dedicated to the first reporting information may be an uplink grant (UL grant) scheduled by the network side for specifically carrying the first reporting information. For example, one bit is added to the first downlink control information (Downlink Control Information, DCI) format (format) or one reserved bit is used to indicate that the UL grant scheduled by the DCI is dedicated to carrying the first reporting information. The first DCI format includes but is not limited to uplink DCI formats (UL DCI format) supported in the existing protocols or newly defined UL DCI formats.

The third report may be a report not belonging to the first reporting information or second reporting information.

Since the terminal determines the first target uplink resource in the reporting resource associated with the third report, resource configurations can be reduced.

Optionally, the third report satisfies at least one of the following:
the third report is associated with the first reporting information;
in configuration information of the third report, a measurement resource configuration associated with the third report is absent or disabled;
in reporting configuration in configuration information of the third report, all reporting-related configurations except the reporting resource are absent or disabled; and
a CSI time requirement is disabled for the third report.

An association relationship between the third report and the first reporting information may be configured or indicated by the network. For example, a radio resource control (Radio Resource Control, RRC) parameter is added to the reporting configuration of the third report to indicate an identifier of the reporting configuration of the first reporting information.

The configuration information of the third report is configured or indicated by the network.

Since the measurement resource configuration associated with the third report is absent or disabled, there is no need to configure a measurement resource associated with the third report during configuration, thereby reducing configuration overhead.

Since all reporting-related configurations except the reporting resource are absent or disabled, such configurations do not need to be configured during configuration, thereby reducing configuration overhead.

The CSI time requirement may be a CSI timeline (CSI timeline), including but not limited to a CSI reference resource (CSI reference resource), Z, or Z', where Z and Z' are protocol-defined CSI time requirements.

Since the CSI time requirement is disabled for the third report, the first reporting information does not need to comply with the CSI time requirement, thereby realizing faster reporting.

The determining, by the terminal, the first target uplink resource based on the second reporting information may be determining the first target uplink resource based on related information of the first target uplink resource indicated in the second reporting information.

The determining, by the terminal, the first target uplink resource based on a network pre-configured uplink resource includes determining, by the terminal, an uplink resource satisfying at least one of the following conditions within the network pre-configured uplink resource as the first target uplink resource:
an uplink resource whose 1st symbol is not earlier than the last symbol of the second target uplink resource;
an uplink resource whose 1st symbol is closest to the last symbol of the second target uplink resource;
an uplink resource for which a time domain interval between the 1st symbol of the uplink resource and the last symbol of the second target uplink resource is not less than a first time interval; and
an uplink resource capable of carrying reporting content.

The first time interval includes at least one of the following:
a time required for the terminal to complete CSI measurement or beam measurement;
a PUSCH preparation time of the terminal;
a time for the terminal to perform data processing on the reporting content; where optionally, data processing may include generation, assembly, or the like; and
a time required for the terminal to map the reporting content to a physical resource.

In addition, before the determining, by the terminal, the first target uplink resource based on a network pre-configured uplink resource, the terminal determines the network pre-configured uplink resource in at least one of the following manners:
the terminal determines the network pre-configured uplink resource based on an uplink resource configured by the network and dedicated to the terminal; and
the terminal determines the network pre-configured uplink resource based on a common uplink resource configured by the network.

Specifically, for example, the network pre-configured uplink resource may be at least one of a periodic PUCCH resource, a periodic PUSCH resource, an aperiodic PUCCH resource, and an aperiodic PUSCH resource. Optionally, the network pre-configured uplink resource is dedicated to terminal-triggered beam reporting. A time domain position of the uplink resource may be determined based on at least one time interval with the second target uplink resource configured by the network and a corresponding duration, or based on a time interval with the second target uplink resource configured by the network and a period (similar to periodic resource configuration or resource configuration for repetition). The time interval may be a time interval with a 1st or last symbol of the second target uplink resource, and the time unit of the time interval may be at least one of frames/subframes/slots/symbols/s/ms. The at least one time interval may be a configuration dedicated to the terminal, or the at least one time interval is separately configured for different terminals to use. The former can reduce reporting latency, while the latter, considering resource utilization, avoids waste of resources by allocating resources to different users. In this case, the determining, by the terminal, the first target uplink resource in a network pre-configured uplink resource may be: using an uplink resource with a smallest time interval as the first target uplink resource, or using an uplink resource with a time interval not less than the first time interval as the first target uplink resource, or using an uplink resource corresponding to a smallest time interval not less than the first time interval as the first target uplink resource.

In addition, the network pre-configured uplink resources may correspond to different resource sizes, that is, the amounts of data that can be carried are different. When or before determining to perform beam reporting, the terminal may select an appropriate uplink resource as the first target uplink resource based on a size of actual reporting content. Further, the terminal may indicate the selected first target uplink resource in the second reporting information. Optionally, in addition to the condition of being capable of carrying the reporting content, the time conditions mentioned above also need to be satisfied.

It should be noted that the first target uplink resource is specifically determined by the terminal based on requirements, which is not limited in the embodiments of this application.

Optionally, the reporting, by the terminal, second reporting information based on a second target uplink resource includes:
in a case that the second target uplink resource overlaps with a first uplink resource, sending the second reporting information on the second target uplink resource, and skipping sending first uplink information on the second target uplink resource and the first uplink resource;
   or
in a case that the second target uplink resource overlaps with a first uplink resource, performing multiplexing transmission of the second reporting information and first uplink information on the second target uplink resource, and skipping sending information on the first uplink resource;
   or
in a case that the second target uplink resource overlaps with a first uplink resource, performing multiplexing transmission of the second reporting information and first uplink information on the first uplink resource, and skipping sending information on the second target uplink resource;
   or
in a case that the second target uplink resource overlaps with a first uplink resource, sending first uplink information on the first uplink resource, and skipping sending the second reporting information on the first uplink resource and the second target uplink resource; where
the first uplink information is uplink information carried on the first uplink resource.

The resource overlap may be time domain overlap, and may be partial or full resource overlap.

The first uplink resource may include but is not limited to at least one of the following:
a PUCCH resource, and a PUSCH resource.

The first uplink information may include but is not limited to at least one of the following:
a hybrid automatic repeat request acknowledge (Hybrid Automatic Repeat Request Acknowledge, HARQ-ACK), CSI, a scheduling request (Scheduling request, SR), and data from an uplink shared channel (Up-Link Shared Channel, UL-SCH).

The sending the second reporting information on the second target uplink resource, and skipping sending first uplink information on the second target uplink resource and the first uplink resource can realize transmission of only the second reporting information, thereby improving transmission performance of the second reporting information.

The performing multiplexing transmission of the second reporting information and first uplink information on the second target uplink resource, and skipping sending information on the first uplink resource can realize multiplexing and transmission of the second reporting information and the first uplink information on the second target uplink resource, thereby improving transmission efficiency of the terminal.

The performing multiplexing transmission of the second reporting information and first uplink information on the first uplink resource, and skipping sending information on the second target uplink resource can realize multiplexing and transmission of the second reporting information and the first uplink information on the first uplink resource, thereby improving transmission efficiency of the terminal.

In a case that the second target uplink resource overlaps with the first uplink resource, sending first uplink information on the first uplink resource, and skipping sending the second reporting information on the first uplink resource and the second target uplink resource can realize sending of only the first uplink information without sending the second reporting information. In a case that the second reporting information is not reported, it is assumed by default that the first reporting information exists or does not exist. In addition, in this case, a priority of the first uplink information is usually higher than that of the second reporting information, so it is necessary to ensure the reliability of the first uplink information.

Optionally, in a case that the second target uplink resource overlaps with the first uplink resource, the first uplink information is sent on the first uplink resource, and the second reporting information is not sent on the first uplink resource or the second target uplink resource, the first reporting information is not sent on the first target uplink resource.

The case that the second target uplink resource overlaps with the first uplink resource, the first uplink information is sent on the first uplink resource, and the second reporting information is not sent on the first uplink resource or the second target uplink resource may occur under a specific condition, for example, the second reporting information indicates that the first reporting information exists. In some implementations, it may alternatively be that the second reporting information is not sent in a case that the second reporting information indicates that the first reporting information does not exist.

Since in the case that the second reporting information is not sent, the first reporting information is not sent on the first target uplink resource neither, the first reporting information can be sent only in a case that the second reporting information is reported, improving the reliability of information reporting. It should be noted that this implementation is only a specific case. For example, in some implementations, the terminal may report the first reporting information in a manner without the second reporting information, that is, a one-step reporting manner. The case where the second reporting information is used may be referred to as a two-step reporting manner.

In the embodiments of this application, whether to use one-step reporting or two-step reporting may be determined by network configuration or dynamic indication, or may be determined according to a preset rule in a protocol, or may be determined by the terminal, for example, determining whether to use one-step reporting or two-step reporting based on state changes in features such as beam and mobility.

In an optional implementation, the reporting, by the terminal, first reporting information based on the first target uplink resource includes:
in a case that the first target uplink resource overlaps with a second uplink resource, sending the first reporting information on the first target uplink resource, and skipping sending second uplink information on the first target uplink resource and the second uplink resource;
   or
in a case that the first target uplink resource overlaps with a second uplink resource, performing multiplexing transmission of the first reporting information and second uplink information on the first target uplink resource, and skipping sending information on the second uplink resource;
   or
in a case that the first target uplink resource overlaps with a second uplink resource, performing multiplexing transmission of the first reporting information and second uplink information on the first uplink resource, and skipping sending information on the first target uplink resource;
   or
in a case that the first target uplink resource overlaps with a second uplink resource, sending second uplink information on the second uplink resource, and skipping sending the first reporting information on the first target uplink resource and the second uplink resource; where
the second uplink information is uplink information carried on the second uplink resource.

The resource overlap may be time domain overlap, and may be partial or full resource overlap.

The second uplink resource may include but is not limited to at least one of the following:
a PUCCH resource, and a PUSCH resource.

The second uplink information may include but is not limited to at least one of the following:
a HARQ-ACK, CSI, an SR, and data from UL-SCH.

The sending the first reporting information on the first target uplink resource, and skipping sending second uplink information on the first target uplink resource and the second uplink resource can realize transmission of only the first reporting information, thereby improving transmission performance of the first reporting information.

The performing multiplexing transmission of the first reporting information and second uplink information on the first target uplink resource, and skipping sending information on the second uplink resource can realize multiplexing and transmission of the first reporting information and the second uplink information on the first target uplink resource, thereby improving transmission efficiency of the terminal.

The performing multiplexing transmission of the first reporting information and second uplink information on the first target uplink resource, and skipping sending information on the first target uplink resource can realize multiplexing and transmission of the first reporting information and the second uplink information on the second uplink resource, thereby improving transmission efficiency of the terminal.

The sending second uplink information on the second uplink resource, and skipping sending the first reporting information on the first target uplink resource and the second uplink resource can realize reliable transmission of the second uplink information. In this case, a priority of the second uplink information is higher than that of the first reporting information, so it is necessary to ensure the second uplink information.

It should be noted that in a case that the above implementation of overlap of the first target uplink resource and the above implementation of overlap of the second target uplink resource are combined, for example, in a case that the first target uplink resource overlaps with the second uplink resource in time domain, and the second target uplink resource overlaps with the first uplink resource in time domain, the terminal performs at least one of the following:
sending the first uplink information on the first uplink resource, and skipping sending the second reporting information on the second target uplink resource; in this case, optionally, skipping sending, by the terminal, the first reporting information on the first target uplink resource;
multiplexing the first uplink information and the second reporting information on the first uplink resource for transmission, and skipping sending information on the second target uplink resource;
sending the second reporting information on the second target uplink resource, and skipping sending the first uplink information on the second target uplink resource and the first uplink resource;
performing multiplexing transmission of the second reporting information and the first uplink information on the second target uplink resource, and skipping sending information on the first uplink resource;
sending the second uplink information on the second uplink resource, and skipping sending the first reporting information on the first target uplink resource and the second uplink resource;
performing multiplexing transmission of the first reporting information and the second uplink information on the second uplink resource, and skipping sending information on the first target uplink resource;
sending the first reporting information on the first target uplink resource, and skipping sending the second uplink information on the first target uplink resource and the second uplink resource; and
performing multiplexing transmission of the first reporting information and the second uplink information on the first target uplink resource, and skipping sending information on the second uplink resource.

Optionally, in a case that the first target uplink resource or the second target uplink resource overlaps with another resource, the multiplexing transmission used satisfies at least one of the following:
multiplexing is performed through puncturing;
multiplexing is performed through rate matching;
multiplexing is performed through bit addition;
multiplexing is performed according to a priority rule; and
at least two multiplexed pieces of information are associated with different cyclic shifts (cyclic shift).

The multiplexing being performed through puncturing may be multiplexing one piece of information onto a corresponding resource through puncturing, for example, multiplexing the first reporting information onto the second uplink resource through puncturing for transmission; for another example, multiplexing the second reporting information onto the first uplink resource through puncturing for transmission; for another example, multiplexing the first uplink information onto the second target uplink resource through puncturing for transmission; and for another example, multiplexing the second uplink information onto the first target uplink resource through puncturing for transmission.

The multiplexing being performed through rate matching may be multiplexing one piece of information onto a corresponding resource through rate matching, for example, multiplexing the first reporting information onto the second uplink resource through rate matching for transmission; for another example, multiplexing the second reporting information onto the first uplink resource through rate matching for transmission; for another example, multiplexing the first uplink information onto the second target uplink resource through rate matching for transmission; and for another example, multiplexing the second uplink information onto the first target uplink resource through rate matching for transmission.

The multiplexing being performed through bit addition may be adding one or more bits before or after one piece of information for padding other information. For example, Y1 bits are added before or after the second reporting information for padding the first uplink information. For another example, Y2 bits are added before or after the first reporting information for padding the second uplink information. For another example, Y3 bits are added before or after the first uplink information for padding the second reporting information. For another example, Y4 bits are added before or after the second uplink information for padding the first reporting information. Y1, Y2, Y3, and Y4 are positive integers, and the values are determined by network configuration or protocol agreement, or determined by the terminal.

In a case that a resource size is limited, low-priority information may be dropped during the multiplexing process according to the above priority rules, where priorities of the information included in the first reporting information, second reporting information, first uplink information, and second uplink information may be agreed upon in a protocol or configured by the network side, or determined by the terminal.

In this way, performing multiplexing according to the priority rule can ensure the transmission of high-priority information, thereby improving transmission performance. For example, in a case that the first reporting information and the second uplink information are multiplexed and transmitted, and the resource size is limited, low-priority information in the first reporting information or the second uplink information can be dropped.

The at least two multiplexed pieces of information being associated with different cyclic shifts can realize different cyclic shifts for different pieces of information in the information multiplexed for transmission, thereby improving reliability of information transmission.

In an optional implementation, the reporting, by the terminal, first reporting information based on the first target uplink resource includes:
reporting, by the terminal, the first reporting information based on the first target uplink resource in a case that a first condition is satisfied.

The first condition may be agreed upon in a protocol, configured by the network side, or determined by the terminal, that is, depending on implementation of the terminal. For example, the first condition may include but is not limited to at least one of the following:
a measurement result of an RS corresponding to a beam currently used by the terminal plus a first offset value is still lower than a first threshold;
a measurement result of an RS corresponding to a beam currently used by the terminal plus a second offset value is still lower than a second threshold within a first time;
the number of times that a measurement result of an RS corresponding to a beam currently used by the terminal plus a third offset value is lower than a third threshold within a second time is not less than M1, where M1 is a positive integer;
there exists at least one first RS whose measurement result minus a fourth offset value is still higher than a measurement result of an RS corresponding to a beam currently used by the terminal;
there exists at least one first RS whose measurement result minus a fifth offset value is still higher, within a third time, than a measurement result of an RS corresponding to a beam currently used by the terminal;
the number of times that there exists at least one first RS whose measurement result minus a sixth offset value is higher, within a fourth time, than a measurement result of an RS corresponding to a beam currently used by the terminal is not less than M2, where M2 is a positive integer;
there exists at least one second RS whose measurement result minus a seventh offset value is still higher than a measurement result of a third RS;
there exists at least one second RS whose measurement result minus an eighth offset value is still higher than a measurement result of a third RS within a fifth time;
the number of times that there exists at least one second RS whose measurement result minus a ninth offset value is higher than a measurement result of a third RS within a sixth time is not less than M3; and
there exists at least one target object, where the target object satisfies at least one of the following:
   a timing advance (Timing advance, TA) value of the target object is 0 or a TA of the target object is the same as that of a current serving object of the terminal;
   a TA of the target object is obtained through a configuration of terminal-based TA measurement (UE-based TA measurement);
   configuration information corresponding to the target object includes configuration information of a random access channel (Random Access Channel, RACH), and the configuration information corresponding to the target object is used for layer 1 or layer 2 triggered mobility (L1/L2-triggered mobility);
   frequency information of an SSB of the target object is the same as frequency information in one measurement object (Meas Object) currently configured for the terminal; and
   the target object is known (known); where
   values of the first threshold, the second threshold, the third threshold, the first time, the second time, the third time, the fourth time, the fifth time, the sixth time, the first offset, the second offset, the third offset, the fourth offset, the fifth offset, the sixth offset, the seventh offset, the eighth offset, the ninth offset, M1, M2, and M3 are all configured or indicated by the network, or specified by default in a protocol, or determined by the terminal.

The first RS, the second RS, and the third RS may be configured by the network or agreed upon in a protocol, and may all be associated with different objects or a same object; and optionally, the second RS and the third RS may be associated with different reporting configurations.

The target object is an object different from the current serving object of the terminal, where the object includes but is not limited to a control resource set pool index (Coreset Pool Index), a channel group, a cell, a cell group, a distributed unit (Distributed Unit, DU), or a centralized unit (Centralized Unit, CU).

In the implementation, the first reporting information can be reported based on the first target uplink resource in a case that the first condition is satisfied, further reducing power consumption of the terminal.

In some implementations, whether the terminal enables the reporting, by the terminal, the first reporting information based on the first target uplink resource in a case that a first condition is satisfied may be configured or indicated by the network-side device. For example, the network-side device may configure or indicate, through RRC signaling, a MAC CE, or DCI, whether to enable the reporting, by the terminal, the first reporting information based on the first target uplink resource in a case that a first condition is satisfied.

The second reporting information may be reported in a case that the first condition is satisfied or not satisfied. For example, in a case that the first condition is not satisfied, the terminal reports only the second reporting information and does not report the first reporting information; and in a case that the first condition is satisfied, the terminal reports the second reporting information and the first reporting information.

In some implementations, the terminal may alternatively ignore the first condition. For example, the terminal itself selects whether to report the first reporting information.

In an optional implementation, in a case that the first measurement associated with the first reporting information is triggered by the terminal, the method further includes:
in a case that a second condition is satisfied, performing, by the terminal, the first measurement; and
in a case that a measurement result of the first measurement satisfies a third condition, reporting, by the terminal, third reporting information related to the measurement result; or in a case that the measurement result of the first measurement does not satisfy the third condition, skipping reporting, by the terminal, the third reporting information related to the measurement result, or reporting fourth reporting information, where the fourth reporting information includes at least one of the following:
   indication information for triggering downlink beam measurement;
   indication information of a downlink reference signal;
   indication information for triggering uplink beam measurement; and
   indication information of an uplink reference signal.

The second condition may be agreed upon in a protocol, configured by the network side, or determined by the terminal. Further optionally, the second condition may include all or part of the content in the first condition.

The third condition may be agreed upon in a protocol, configured by the network side, or determined by the terminal. Further optionally, the third condition may include part of the content in the first condition. For example, the third condition may include but is not limited to at least one of the following:
a measurement result minus a specific offset value is still higher than a fourth threshold;
a measurement result minus a specific offset value is still higher than a fifth threshold within a preset time period; and
a measurement result minus a specific offset value is still higher than a measurement result of an RS corresponding to a beam currently used by the terminal plus a specific offset value.

The third reporting information related to the measurement result may include the measurement result or beam-related information of the measurement, such as at least one of the first information and the first report in the foregoing implementation.

For the content included in the fourth reporting information, reference may be made to the corresponding description of the first reporting information. Details are not repeated herein.

In this implementation, in a case that the first measurement associated with the first reporting information is triggered by the terminal, if the second condition is satisfied, the terminal triggers the first measurement. If the measurement result satisfies the third condition, the terminal reports the measurement result or beam-related information; and if the measurement result does not satisfy the third condition, the terminal does not report or reports the fourth reporting information. Not reporting can reduce the terminal power consumption and save transmission resources, whereas reporting the fourth reporting information can trigger uplink or downlink measurement, so as to trigger a new measurement in a case that the third condition is not satisfied, helping improve communication performance of the terminal. For example, a new beam is discovered through the triggered new measurement.

It should be noted that in another implementation, in a case that the first measurement associated with the first reporting information is triggered by the terminal, the terminal may report the first reporting information based on the first target uplink resource in a case that the first condition is satisfied. Reference may be made to the above implementation, and details are not repeated herein.

In an optional implementation, at least one of the first reporting information and the second reporting information is reported as a new type of uplink control information (Uplink Control Information, UCI); or at least one of the first reporting information and the second reporting information is reported as CSI.

The new UCI is a type of UCI newly defined on a basis of the UCI already defined in protocols according to the embodiments of this application.

In this implementation, the first reporting information or the second reporting information may be uploaded as new UCI; the first reporting information or the second reporting information may be reported as CSI; or the first reporting information or the second reporting information may have part of the information reported as UCI and part of the information reported as CSI. This can improve flexibility of information reporting.

In an optional implementation, the method further includes:
receiving, by the terminal, configuration information sent by the network-side device, where the configuration information is used for configuring at least one of the following:
the terminal selectively performing information reporting; and
a third target uplink resource, where the third target uplink resource is at least one of the first target uplink resource and the second target uplink resource, and includes at least one of a periodic PUCCH, a CG-PUSCH resource, a semi-persistent PUSCH resource, and an aperiodic PUSCH resource.

The terminal selectively performing information reporting may be selectively performing, by the terminal, reporting of the first reporting information. For example, the terminal may perform reporting on the third target uplink resource, or may not perform reporting on the third target uplink resource. Whether to perform reporting specifically depends on whether the first condition is satisfied or implementation of the terminal.

The third target uplink resource being at least one of the first target uplink resource and the second target uplink resource may be understood as follows: the first target uplink resource may include at least one of a periodic PUCCH, a CG-PUSCH resource, and a semi-persistent PUSCH resource, and the second target uplink resource may include at least one of a periodic PUCCH, a CG-PUSCH resource, a semi-persistent PUSCH resource, and an aperiodic PUSCH resource.

In some implementations, the first target uplink resource may alternatively be a dynamic grant (dynamical grant, DG)-PUSCH.

In the above implementation, through the above configuration information, the terminal is configured to selectively perform information reporting on the third target uplink resource. This enables the terminal and the network-side device to achieve consistent understanding in the reporting of the first reporting information or the second reporting information, thereby improving the transmission reliability of the first reporting information or the second reporting information.

In the embodiments of this application, a terminal determines a first target uplink resource; and the terminal reports first reporting information based on the first target uplink resource, where the first reporting information is triggered for reporting by the terminal, or a first measurement associated with the first reporting information is triggered by the terminal. In this way, since the information reporting or the first measurement is triggered by the terminal, unnecessary measurements or reporting can be avoided or reduced, thereby reducing power consumption of the terminal and saving transmission resources.

Referring to FIG. 3, FIG. 3 is a flowchart of another information reporting method according to an embodiment of this application. As shown in FIG. 3, the method includes the following steps.

Step 301: A network-side device receives first reporting information reported by a terminal based on a first target uplink resource, where the first reporting information is triggered for reporting by the terminal, or a first measurement associated with the first reporting information is triggered by the terminal.

Optionally, in a case that the first measurement associated with the first reporting information is triggered by the terminal, the first reporting information is obtained based on the first measurement triggered by the terminal.

Optionally, the first reporting information includes at least one of the following:
indication information indicating that the terminal triggers reporting;
a first report, where the first report includes at least one of the following: a reference signal index, and a measurement result;
indication information for indicating the network-side device to trigger beam measurement and reporting;
indication information of a downlink reference signal;
indication information for triggering uplink beam measurement;
indication information of an uplink reference signal; and
first information.

Optionally, the method further includes:
receiving, by the network-side device, second reporting information reported by the terminal based on a second target uplink resource.

Optionally, the second reporting information is a scheduling request dedicated to the terminal-triggered reporting of the first reporting information, and the second target uplink resource is an uplink resource configured by a network side for carrying the second reporting information.

Optionally, the first target uplink resource and the second target uplink resource belong to a same channel resource; or
the first target uplink resource and the second target uplink resource belong to different channel resources.

Optionally, the first reporting information includes at least one of the following:
a first report, where the first report includes at least one of the following: a reference signal index, and a measurement result;
indication information for indicating the network-side device to trigger beam measurement and reporting;
indication information of a downlink reference signal;
indication information for triggering uplink beam measurement;
indication information of an uplink reference signal; and
first information;
   or
the second reporting information includes at least one of the following:
   indication information indicating that the terminal triggers reporting;
   indication information used for indicating whether the first report exists;
   indication information used for indicating a size of the first report;
   indication information of the first target uplink resource;
   a second report, where the second report includes at least one of the following: a reference signal index, and a measurement result;
   indication information for indicating the network-side device to trigger beam measurement and reporting;
   indication information of a downlink reference signal;
   indication information for triggering uplink beam measurement;
   indication information of an uplink reference signal; and
   first information.

Optionally, the first information includes at least one of the following:
a transmission configuration indicator TCI state identifier;
an uplink transmission configuration indicator TCI-UL state identifier;
a TCI codepoint identifier;
spatial relation information;
a reference signal index; and
terminal assistance information.

Optionally, the indication information of the first target uplink resource includes at least one of the following:
time domain offset information between the first target uplink resource and the second target uplink resource, or time domain position information of the first target uplink resource;
frequency domain offset information between the first target uplink resource and the second target uplink resource, or frequency domain position information of the first target uplink resource; and
an identifier of the first target uplink resource.

Optionally, the first target uplink resource includes at least one of the following:
a first target uplink resource determined in an uplink resource scheduled by the network-side device and dedicated to the first reporting information;
a first target uplink resource determined in a reporting resource associated with a third report, where the reporting resource associated with the third report is configured, indicated, or activated by the network-side device;
the first target uplink resource determined based on the second reporting information; and
a first target uplink resource determined based on a network pre-configured uplink resource.

Optionally, the first target uplink resource determined based on the network pre-configured uplink resource includes: an uplink resource satisfying at least one of the following conditions in the network pre-configured uplink resource:
an uplink resource whose 1st symbol is not earlier than the last symbol of the second target uplink resource;
an uplink resource whose 1st symbol is closest to the last symbol of the second target uplink resource;
an uplink resource for which a time domain interval between the 1st symbol of the uplink resource and the last symbol of the second target uplink resource is not less than a first time interval; and
an uplink resource capable of carrying reporting content.

Optionally, the first time interval includes at least one of the following:
a time required to complete CSI measurement or beam measurement;
a PUSCH preparation time;
a time for performing data processing on the reporting content; where optionally, data processing may include generation, assembly, or the like; and
a time required to map the reporting content to a physical resource.

The network pre-configured uplink resource includes at least one of the following:
a network pre-configured reporting resource determined based on an uplink resource configured by the network and dedicated to the terminal; and
a network pre-configured reporting resource determined based on a common uplink resource configured by the network.

Optionally, the third report satisfies at least one of the following:
the third report is associated with the first reporting information;
in configuration information of the third report, a measurement resource configuration associated with the third report is absent or disabled;
in reporting configuration in configuration information of the third report, all reporting-related configurations except the reporting resource are absent or disabled; and
a channel state information CSI time requirement is disabled for the third report.

Optionally, at least one of the first reporting information and the second reporting information is reported as a new type of uplink control information UCI; or at least one of the first reporting information and the second reporting information is reported as CSI.

Optionally, the method further includes:
sending, by the network-side device, configuration information to the terminal, where the configuration information is used for configuring at least one of the following:
the terminal selectively performing information reporting; and
a third target uplink resource, where the third target uplink resource is at least one of the first target uplink resource and the second target uplink resource, and includes at least one of a periodic physical uplink control channel PUCCH, a configured grant physical uplink shared channel CG-PUSCH resource, a semi-persistent PUSCH resource, and an aperiodic PUSCH resource.

It should be noted that for a specific implementation of this embodiment as an implementation on the network-side device corresponding to the embodiment shown in FIG. 2, reference may be made to the relevant description of the embodiment shown in FIG. 2. To avoid repetition, details are not provided in this embodiment again.

The following uses the reporting information being beam-related information as an example to describe the method according to the embodiments of this application through multiple embodiments.

### Embodiment 1:

This embodiment mainly describes one-step beam reporting, which may include the following multiple embodiments.

Embodiment 1.1 A terminal-triggered beam report is reported on a PUCCH.

Manner 1: A network configures or indicates N1 (N1>1) PUCCH resources corresponding to different PUCCH formats (PUCCH format) to a UE for reporting a terminal-triggered information report, where the numbers of UCI bits that the N1 PUCCH formats can carry are different. Taking N1=2 as an example, the number of UCI bits that PUCCH format #n can carry is smaller than that of PUCCH format #m. PUCCH resource #1 with PUCCH format #n is used to carry indication information indicating that no beam report exists on a terminal side/no beam update need to be performed/no beam measurement need to be performed. PUCCH resource #2 with PUCCH format #m is used to carry at least one of the following information:
indication information indicating that there is a beam report to be reported on the terminal side/beam update needs to be performed/beam measurement needs to be performed; and
a beam report/indication information of an RS resource for beam measurement/beam indication information.

Manner 2: The network configures or indicates one PUCCH resource #1 for the UE to report a terminal-triggered information report, where the PUCCH resource is a periodic resource.

RRC configuration enhancement: One RRC parameter, for example, report skipping (ReportSkipping), is added to CSI report configuration (CSI-ReportConfig)/layer 1 or layer 2 triggered mobility (L1/L2-triggered mobility, LTM) CSI report configuration (LTM-CSI-ReportConfig). When this parameter is configured or is configured and enabled, it is used to indicate that for a periodic or semi-persistent CSI report/LTM report, the terminal may choose not to report the corresponding report.

For resource collisions, the following solutions may be used.

Solution 1: In a case that PUCCH resource #1 overlaps with PUCCH resource #2 corresponding to K (K≥1) SR configurations in time domain, the terminal behavior includes at least one of the following:
sending an SR for PUCCH resource #2, and skipping sending first reporting information of PUCCH resource #1;
skipping sending PUCCH resource #1, and multiplexing k1 (k1≥1, with a typical value being 1) bits to PUCCH resource #2 for transmission, to indicate whether the network needs to schedule an uplink grant (UL grant) for transmitting the first reporting information; where further optionally, the k1 bits are placed after the SR; for example, a value 1 indicates that network scheduling is required, that is, PUCCH resource #1 carries the first reporting information; otherwise, a value 0 indicates that no network scheduling is required; and
multiplexing the SR onto PUCCH resource #1 for transmission, and adding $\left⌈{log}_{2}\left(K+1\right)\right⌉$ bits before the first reporting information (if present) to indicate the K SR configurations.

Solution 2: In a case that PUCCH resource #1 overlaps in time domain with PUCCH resource #3 carrying a HARQ-ACK, the terminal behavior includes at least one of the following:
sending the HARC-ACK of PUCCH resource #3, and skipping sending the first reporting information of PUCCH resource #1;
multiplexing k1 (k1≥1, with a typical value being 1) bits to PUCCH resource #3 for transmission, to indicate that the network schedules a UL grant for transmitting the first reporting information, and skipping sending PUCCH resource #1; where further optionally, the k1 bits are placed after a HARQ-ACK sequence;
if the HARQ-ACK corresponds to a PDSCH scheduled without a physical downlink control channel (Physical Downlink Control Channel, PDCCH), placing the first reporting information (if present) on PUCCH resource #3 for multiplexing transmission, and skipping sending PUCCH resource #1; and
if the HARQ-ACK corresponds to a PDSCH scheduled with a PDCCH, multiplexing the HARQ-ACK onto PUCCH resource #1 for transmission, and skipping sending PUCCH resource #3. When the first reporting information is used as CSI for UCI mapping, a priority of the first reporting information is higher than that of CSI part I (CSI part I); or the first reporting information is used as CSI part I, with a priority higher than that of CSI part II; or the first reporting information is divided into part I and part II, where part I of the first reporting information has a higher priority than CSI part I, CSI part I has a higher priority than part II of the first reporting information, and part II has a higher priority than CSI part II. That is, after HARQ-ACK bit mapping, the terminal determines, based on the priorities, the CSI sequence to be carried on PUCCH resource #1. In a case that the first reporting information does not exist, the multiplexing rule includes at least one of the following:
   padding all bit positions originally for the first reporting information with zeros; and
   according to a priority rule, selecting first information for mapping at the bit positions originally for the first reporting information; where
   the first information includes at least one of the first reporting information, a CSI report, and an LTM report.

Solution 3: In a case that PUCCH resource #1 overlaps in time domain with PUCCH resource #4 carrying CSI, the terminal behavior includes at least one of the following:
performing multiplexing or dropping according to the following priority rule:
first reporting information > first report;
determining the priority between first reports according to an existing protocol; where the first report includes a CSI report and an LTM report; and
if there are multiple pieces of first reporting information, determining priorities of the multiple pieces of first reporting information according to a preset manner.

In a case that the first reporting information does not exist, that is, the terminal does not perform reporting, the multiplexing rule includes at least one of the following:
padding all bit positions originally for the first reporting information with zeros; and
according to a priority rule, selecting first information for mapping at the bit positions originally for the first reporting information; where
the first information includes at least one of the first reporting information, a CSI report, and an LTM report.

Solution 4: In a case that PUCCH resource #1 and PUSCH resource #1 overlap in time domain, the terminal behavior includes at least one of the following:
sending PUSCH resource #1, and skipping sending PUCCH resource #1;
sending PUCCH resource #1, and skipping sending PUSCH resource #1; and
if PUCCH resource #1 and PUSCH resource #1 satisfy a multiplexing time requirement, skipping sending PUCCH resource #1, but multiplexing k1 (k1≥1, with a typical value of 1) bits to PUSCH resource #1 for transmission, to indicate at least one of the following information:
   the network schedules a UL grant for transmitting the first reporting information; and
   whether PUSCH #1 carries the first reporting information.

Further, the k1 bits are multiplexed onto PUSCH #1 for transmission through puncturing or rate matching; further, if PUSCH resource #1 carries the first reporting information, multiplexing is performed through rate matching.

The multiplexing priority rule is: HARQ-ACK, HARQ-ACK and CG-UCI/UTO-UCI, CG-UCI/UTO-UCI > first reporting information > CSI part I > CSI part II > data; or HARQ-ACK, HARQ-ACK and CG-UCI/UTO-UCI, CG-UCI/UTO-UCI > part I of first reporting information > CSI part I > part II of first reporting information > CSI part II > data; or HARQ-ACK, HARQ-ACK and CG-UCI/UTO-UCI, CG-UCI/UTO-UCI > CSI part I > first reporting information > CSI part II > data.

A rate matching factor corresponding to the first reporting information may be determined in the following manner:
being the same as a rate matching factor of CSI part I;
being the same as a rate matching factor of CSI part II;
being determined by the network through RRC parameter configuration; and
being one factor selected and determined from a network-configured factor list based on dynamic indication signaling sent by the network-side device.

Embodiment 1.2 A terminal-triggered beam report is reported on a PUSCH.

Manner 1: A network configures or indicates N2 (N2≥1) CG-PUSCH resources to the UE for reporting terminal-triggered first reporting information.

In a case that the first reporting information exists, it is multiplexed onto the nearest CG-PUSCH resource for transmission. Specifically, the multiplexing is implemented through puncturing or rate matching. For multiplexing through rate matching, a rate matching factor corresponding to the first reporting information may be determined in the following manner:
being the same as a rate matching factor of CSI part I;
being the same as a rate matching factor of CSI part II;
being determined by the network through RRC parameter configuration; and
being one factor selected and determined from a network-configured factor list based on dynamic indication signaling sent by the network-side device.

A priority of the terminal-triggered first reporting information is the same as that of the CG-PUSCH carrying the terminal-triggered first reporting information; and
optionally, a multiplexing priority of the terminal-triggered first reporting information is the same as that of at least one of HARQ-ACK, CG-UCI, and UTO-UCI; and further optionally, it may be jointly encoded with at least one of HARQ-ACK, CG-UCI, and UTO-UCI.

Manner 2: The network configures or indicates one PUSCH resource #1 to the UE for reporting terminal-triggered first reporting information.

RRC configuration enhancement: One RRC parameter (such as ReportSkipping) is added to CSI-ReportConfig/LTM-ReportConfig. When this parameter is configured or is configured and enabled, it is used to indicate that for a semi-persistent CSI report/LTM report, the terminal may choose not to report the corresponding report.

DCI format enhancement: For example, one piece of indication information is added to DCI format, to indicate that a PUSCH scheduled by first DCI is dedicated to transmitting the first reporting information.

For resource collisions, the following solutions may be used.

In a case that PUSCH resource #1 not carrying uplink shared channel (UpLink Shared Channel, UL-SCH) data overlaps in time domain with PUSCH resource #2 carrying UL-SCH, the terminal behavior includes one of the following:
skipping sending PUSCH resource #1, and sending PUSCH resource #2;
skipping sending PUSCH resource #2, and sending PUSCH resource #1; and
sending PUSCH resource #1 and sending PUSCH resource #2, if the terminal has the capability of simultaneous transmission.

In a case that PUSCH resource #1 not carrying UL-SCH data overlaps in time domain with PUCCH resource #2 carrying a positive SR (positive SR), the terminal behavior includes one of the following:
skipping sending PUSCH resource #1, and sending PUCCH resource #2; and
multiplexing the positive SR onto PUSCH resource #1 for transmission, and skipping sending PUCCH resource #2; where the multiplexing manner includes but is not limited to puncturing or rate matching.

### Embodiment 2:

This embodiment describes a two-step beam reporting method.

In the two-step information reporting, second reporting information is sent through a second target uplink resource, to indicate whether a terminal has first reporting information that needs to be reported; and further optionally, a size of the first reporting information and related information of a first target uplink resource may also be indicated in the second reporting information. Specifically, the second reporting information includes at least one of the following:
1 bit for indicating whether there is first reporting information that needs to be reported;
the number of bits of the first reporting information; further optionally, a special value, such as 0, is set for this item to indicate that the first reporting information is to be reported;
a range indication of the number of bits of the first reporting information; for example, 0 indicates that the number of bits falls in a range of [0-10], and 1 indicates that the number of bits falls in a range of [11-20]; further optionally, a special value is set for this item to indicate that there is no first reporting information to be reported;
a time domain offset value; where the time domain offset value is a time domain interval of the first target uplink resource relative to the second target uplink resource; further optionally, when it is set to a special value, it indicates that the first reporting information is to be reported;
a frequency domain offset value relative to the second target uplink resource, in the unit of PRB/RE;
a frequency domain position of the first target uplink resource;
a time domain position of the first target uplink resource; and
a configuration identifier of the first target uplink resource.

After transmission of the second reporting information on the second target uplink resource is completed, the terminal may determine the first target uplink resource in the following manners.

Manner 1: determining the first target uplink resource based on a UL grant scheduled by the network side and dedicated to carrying the first reporting information; and adding one bit to a first DCI format, or using one reserved bit to indicate that an UL grant scheduled by DCI is dedicated to carrying the first reporting information; where the first DCI format includes but is not limited to an UL DCI format supported in the existing standard or a new UL DCI format.

Manner 2: determining the first target uplink resource based on a reporting resource associated with a third report, where the third report is configured, activated, or triggered by the network side.

Configuration information of the third report is configured by the network, including but not limited to at least one of the following:
an associated measurement resource configuration is default;
all reporting-related configurations except the reporting resource are absent or disabled;
the third report is associated with a report associated with the first reporting information; and
a CSI timeline (including but not limited to a CSI reference resource, Z, and Z') is disabled for the third report, that is, reporting the first reporting information on the first target uplink resource does not need to comply with the CSI timeline.

Manner 3: determining the first target uplink resource in combination with related information of the first target uplink resource indicated in the second reporting information. This manner is applicable to scenarios of configured grant or semi-persistent CSI PUSCH reporting.

After determining the first target uplink resource, the terminal transmits the first reporting information on the first target uplink resource.

Next, for a channel type of the first or second target uplink resource, a collision resolution mechanism used when the first or second target uplink resource overlaps with another uplink resource in time domain may include the following:

In a case that the second target uplink resource includes a PUCCH, and the first target uplink resource includes a PUCCH, a CG-PUSCH, a DG-PUSCH, or an aperiodic CSI PUSCH, the following solutions are included.

Solution 1: In a case that the second target uplink resource overlaps with PUCCH resource #y in time domain:

If the second reporting information indicates that no first reporting information is to be reported, the following manners are included.

Manner 1: If PUCCH resource #y carries a HARQ-ACK, the terminal behavior includes at least one of the following:
sending only PUCCH resource #y, and skipping sending the second reporting information;
multiplexing the second reporting information onto PUCCH resource #y for transmission, and skipping sending the second target uplink resource; further, adding Y1 bits after the HARQ-ACK information bits for padding the second reporting information; and
multiplexing the HARQ-ACK onto the second target uplink resource for transmission, where the HARQ-ACK bit sequence is arranged before the second reporting information, and skipping sending PUCCH resource #y.

Manner 2: If PUCCH resource #y carries CSI, the terminal behavior includes at least one of the following:
sending only PUCCH resource #y, and skipping sending the second reporting information; and
multiplexing the second reporting information onto PUCCH resource #y for transmission, and skipping sending the second target uplink resource; further, adding Y1 bits before the CSI information bits for padding the second reporting information.

Manner 3: If PUCCH resource #y carries an SR, the terminal behavior includes at least one of the following:
sending only PUCCH resource #y, and skipping sending the second reporting information;
sending only the second target uplink resource, and skipping sending PUCCH resource #y;
multiplexing the second reporting information onto PUCCH resource #y for transmission, and skipping sending the second target uplink resource; further, adding Y1 bits before or after the SR information bits for padding the second reporting information; and
multiplexing the SR onto the second target uplink resource for transmission, and skipping sending PUCCH resource #y; further, adding Y2 (Y2≥1) bits before or after the second reporting information bits for padding the SR.

If the first reporting information indicates that there is second reporting information to be reported, the following manners are included.

Manner 1: If PUCCH resource #y carries a HARQ-ACK, the terminal behavior includes at least one of the following:
sending only PUCCH resource #y, and skipping sending the second reporting information; where optionally, the terminal does not send the first reporting information on the first target uplink resource; or optionally, the terminal sends the first reporting information on the first target uplink resource; further optionally, before sending the first reporting information, the terminal informs the network of the first target uplink resource;
multiplexing the second reporting information onto PUCCH resource #y for transmission, and skipping sending the second target uplink resource; further, the second reporting information and HARQ-ACK use different cyclic shifts;
multiplexing the second reporting information onto PUCCH resource #y for transmission, and skipping sending the second target uplink resource; further, adding Y1 bits after the HARQ-ACK information bits for padding the second reporting information; and
multiplexing the HARQ-ACK onto the second target uplink resource for transmission, where the HARQ-ACK bit sequence is arranged before the second reporting information, and skipping sending PUCCH resource #y.

Manner 2: If PUCCH resource #y carries CSI, the terminal behavior includes at least one of the following:
sending only PUCCH resource #y, and skipping sending the second reporting information; where optionally, the terminal does not send the first reporting information on the first target uplink resource; or optionally, the terminal sends the first reporting information on the first target uplink resource; further optionally, before sending the first reporting information, the terminal informs the network of the first target uplink resource;
sending only the second target uplink resource, and skipping sending PUCCH resource #y; and
multiplexing the second reporting information onto PUCCH resource #y for transmission, and skipping sending the second target uplink resource; further, adding Y1 bits before the CSI information bits for padding the second reporting information.

Manner 3: If PUCCH resource #y carries an SR, the terminal behavior includes at least one of the following:
sending only PUCCH resource #y, and skipping sending the second reporting information; where optionally, the terminal does not send the first reporting information on the first target uplink resource; or optionally, the terminal sends the first reporting information on the first target uplink resource; further optionally, before sending the first reporting information, the terminal informs the network of the first target uplink resource;
sending only the second target uplink resource, and skipping sending PUCCH resource #y;
multiplexing the second reporting information onto PUCCH resource #y for transmission, and skipping sending the second target uplink resource; further, adding Y1 bits before or after the SR information bits for padding the second reporting information; and
multiplexing the SR onto the second target uplink resource for transmission, and skipping sending PUCCH resource #y; further, adding Y2 (Y2≥1) bits before or after the second reporting information bits for padding the SR.

Solution 2: In a case that the second target uplink resource overlaps with PUSCH resource #y in time domain:

If the second reporting information indicates that the first reporting information is to be reported, the terminal behavior includes at least one of the following:
multiplexing first uplink control information (if present) carried in the second target uplink resource onto the PUSCH resource for transmission, and skipping sending the second reporting information and the second target uplink resource; where the first uplink control information includes but is not limited to at least one of HARQ-ACK and CSI; optionally, the terminal does not send the first reporting information on the first target uplink resource; or optionally, the terminal sends the first reporting information on the first target uplink resource; further optionally, before sending the first reporting information, the terminal informs the network of the first target uplink resource; and
multiplexing the second reporting information onto PUSCH resource #y for transmission, and skipping sending the second target uplink resource; where the multiplexing form includes puncturing or rate matching, where rate matching is determined by introducing a rate matching factor associated with the second reporting information, which may specifically be configured or indicated by the network.

If the second reporting information indicates that the first reporting information is to be reported, the terminal behavior includes at least one of the following:
sending only the second target uplink resource, and skipping sending PUSCH resource #y;
multiplexing the second reporting information onto PUSCH resource #y for transmission, and skipping sending the second target uplink resource; where the multiplexing form includes puncturing or rate matching, where rate matching is determined by introducing a rate matching factor associated with the second reporting information, which may specifically be configured or indicated by the network; and
multiplexing first uplink control information (if present) carried in the second target uplink resource onto the PUSCH resource for transmission, and skipping sending the second reporting information and the second target uplink resource; where the first uplink control information includes but is not limited to at least one of HARQ-ACK and CSI; optionally, the terminal does not send the first reporting information on the first target uplink resource; or optionally, the terminal sends the first reporting information on the first target uplink resource; optionally, before sending the first reporting information, the terminal informs the network of the first target uplink resource.

Solution 3: According to Solution 1 and Solution 2, the terminal determines to send the first reporting information, and sends the first reporting information on the first target uplink resource. In a case that the first target uplink resource overlaps with uplink resource #P in time domain:
Solution 3-1: The first target uplink resource is a PUCCH, and uplink resource #P is a PUCCH.

The solution is the same as Solutions 1, 2, and 3 in the resource collision mechanism in Manner 2 of Embodiment 1.1 in Embodiment 1. Details are not discussed herein.

Solution 3-2: The first target uplink resource is a PUCCH, and uplink resource #P is a PUSCH.

The solution is the same as Solution 4 in the resource collision mechanism in Manner 2 of Embodiment 1.1 in Embodiment 1. Details are not discussed herein.

Solution 3-3: The first target uplink resource is a PUSCH.

The solution is the same as Manner 1 and Manner 2 in Embodiment 1.2 in Embodiment 1. Details are not discussed herein.

In a case that the second target uplink resource includes a CG-PUSCH, a DG-PUSCH, or an aperiodic CSI PUSCH, and the first target uplink resource includes a PUCCH, a CG-PUSCH, a DG-PUSCH, or an aperiodic CSI PUSCH, the terminal does not expect that the second target uplink resource and PUSCH overlap in time domain. Specifically, the following solutions are included.

Solution 1: In a case that the second target uplink resource overlaps with PUCCH resource #y in time domain:

If the second reporting information indicates that the first reporting information is to be reported, the following manners are included.

Manner 1: If PUCCH resource #y carries a HARQ-ACK, the terminal behavior includes at least one of the following:
sending only PUCCH resource #y, and skipping sending the second reporting information; and
multiplexing the HARQ-ACK onto the second target uplink resource for transmission, and skipping sending PUCCH resource #y.

Manner 2: If PUCCH resource #y carries CSI, the terminal behavior includes at least one of the following:
sending only PUCCH resource #y, and skipping sending the second reporting information; and
multiplexing the CSI onto the second target uplink resource for transmission, and skipping sending PUCCH resource #y.

Manner 3: If PUCCH resource #y carries an SR, the terminal behavior includes at least one of the following:
sending only PUCCH resource #y, and skipping sending the second reporting information; where further optionally, the SR is a positive SR;
multiplexing the SR onto the second target uplink resource for transmission, and skipping sending PUCCH resource #y; and
sending only the second target uplink resource, and skipping sending the SR.

If the first target indication information indicates that there is the first reporting information to be reported, the following manners are included.

Manner 1: If PUCCH resource #y carries a HARQ-ACK, the terminal behavior includes at least one of the following:
sending only PUCCH resource #y, and skipping sending the second reporting information; where optionally, the terminal does not send the first reporting information on the first target uplink resource; or optionally, the terminal sends the first reporting information on the first target uplink resource; further optionally, before sending the first reporting information, the terminal informs the network of the first target uplink resource;
sending only the second target uplink resource, and skipping sending the HARQ-ACK and PUCCH resource #y; and
multiplexing the HARQ-ACK onto the second target uplink resource for transmission, and skipping sending PUCCH resource #y.

Manner 2: If PUCCH resource #y carries CSI, the terminal behavior includes at least one of the following:
sending only PUCCH resource #y, and skipping sending the second reporting information; where optionally, the terminal does not send the first reporting information on the first target uplink resource; or optionally, the terminal sends the first reporting information on the first target uplink resource; further optionally, before sending the first reporting information, the terminal informs the network of the first target uplink resource;
sending only the second target uplink resource, and skipping sending PUCCH resource #y and CSI; and
multiplexing the CSI onto the second target uplink resource for transmission, and skipping sending PUCCH resource #y.

Manner 3: If PUCCH resource #y carries an SR, the terminal behavior includes at least one of the following:
sending only PUCCH resource #y, and skipping sending the second reporting information; where optionally, the SR is a positive SR; optionally, the terminal does not send the first uplink information on the first target uplink resource; or optionally, the terminal sends the first uplink information on the first target uplink resource; further optionally, before sending the first uplink information, the terminal informs the network of the first target uplink resource;
sending only the second target uplink resource, and skipping sending PUCCH resource #y and the SR; and
multiplexing the SR onto the second target uplink resource for transmission, and skipping sending PUCCH resource #y.

Solution 2: In a case that the second target uplink resource overlaps with PUSCH resource #y in time domain:

If the second reporting information indicates that no first reporting information is to be reported, the terminal behavior includes at least one of the following:
sending only PUSCH resource #y, and skipping sending the second reporting information and the second target uplink resource; and
multiplexing the second reporting information onto PUSCH resource #y for transmission, and skipping sending the second target uplink resource; where the multiplexing form includes puncturing or rate matching, where rate matching is determined by introducing a rate matching factor associated with the second reporting information, which may specifically be configured or indicated by the network.

If the second reporting information indicates that the first reporting information is to be reported, the terminal behavior includes at least one of the following:
sending only the second target uplink resource, and skipping sending PUSCH resource #y;
multiplexing the second reporting information onto PUSCH resource #y for transmission, and skipping sending the second target uplink resource; where the multiplexing form includes puncturing or rate matching, where rate matching is determined by introducing a rate matching factor associated with the second reporting information, which may specifically be configured or indicated by the network; and
multiplexing information carried in PUSCH resource #y onto the second target uplink resource for transmission, and skipping sending PUSCH resource #y; where the multiplexing form includes puncturing or rate matching, where rate matching is determined by introducing a rate matching factor associated with the information carried in PUSCH resource #y, which may specifically be configured or indicated by the network.

Solution 3: According to Solution 1 and Solution 2, the terminal determines to send the first reporting information, and sends the first reporting information on the first target uplink resource. In a case that the first target uplink resource overlaps with uplink resource #P in time domain:
Solution 3-1: The first target uplink resource is a PUCCH, and uplink resource #P is a PUCCH.

The solution is the same as Solution 1, 2, and 3 in the resource collision mechanism in Manner 2 of Embodiment 1.1 in Embodiment 1. Details are not discussed herein.

Solution 3-2: The first target uplink resource is a PUCCH, and uplink resource #P is a PUSCH.

The solution is the same as Solution 4 in the resource collision mechanism in Manner 2 of Embodiment 1.1 in Embodiment 1. Details are not discussed herein.

Solution 3-3: The first target uplink resource is a PUSCH.

The solution is the same as Manner 1 and Manner 2 in Embodiment 1.2 in Embodiment 1. Details are not discussed herein.

It should be noted that the foregoing solutions are merely examples.

Optionally, in a case that the second target uplink resource is a PUCCH, the second target uplink resource carries a first SR, where the first SR is an SR dedicated to terminal-triggered information reporting (configured by the network), optionally, the first SR is triggered by a physical layer of the terminal; or the first SR may be the same as an SR for beam failure recovery; optionally, the second target uplink resource is a PUCCH resource configured by the network and associated with the first SR.

In the embodiments of this application, for beam reporting, the following solutions may be included.

Solution 1: One-step reporting and collision resolution mechanism: The network configures a periodic or semi-static reporting resource (CG-PUSCH or P/SP CSI), and UE performs selective reporting.

Solution 2: Two-step reporting and corresponding collision resolution mechanism: A reporting terminal informs, through a second target uplink resource configured or scheduled by a network, the network whether there is first reporting information to be reported. If yes, a beam-related report is sent on a first target uplink resource. The first target uplink resource is determined by the UE and indicated in the second target uplink resource, or determined through network configuration or scheduling.

To address the problems of resource waste and high terminal power consumption in the network-side triggered beam reporting mechanism, the embodiments of this application propose a terminal-triggered beam reporting mechanism, and further design corresponding reporting resource allocation and resource collision solutions, thereby improving resource utilization and reducing terminal power consumption.

The information reporting method according to the embodiments of this application may be executed by an information reporting apparatus. In the embodiments of this application, the information reporting method being executed by the information reporting apparatus is taken as an example to describe an information reporting apparatus according to an embodiment of this application.

Referring to FIG. 4, FIG. 4 is a structural diagram of an information reporting apparatus according to an embodiment of this application. As shown in FIG. 4, the information reporting apparatus 400 includes:
a determining module 401 configured to determine a first target uplink resource; and
a first reporting module 402 configured to report first reporting information based on the first target uplink resource, where the first reporting information is triggered for reporting by the terminal, or a first measurement associated with the first reporting information is triggered by the terminal.

Optionally, in a case that the first measurement associated with the first reporting information is triggered by the terminal, the first reporting information is obtained based on the first measurement triggered by the terminal.

Optionally, the first reporting information includes at least one of the following:
indication information indicating that the terminal triggers reporting;
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information.

Optionally, the apparatus further includes:
a second reporting module configured to report second reporting information based on a second target uplink resource.

Optionally, the second reporting information is a scheduling request dedicated to the terminal-triggered reporting of the first reporting information, and the second target uplink resource is an uplink resource configured by a network side for carrying the second reporting information.

Optionally, the first target uplink resource and the second target uplink resource belong to a same channel resource; or
the first target uplink resource and the second target uplink resource belong to different channel resources.

Optionally, the first reporting information includes at least one of the following:
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information;
   or
the second reporting information includes at least one of the following:
   indication information indicating that the terminal triggers reporting;
   indication information used for indicating whether the first report exists;
   indication information used for indicating a size of the first report;
   indication information of the first target uplink resource;
   a second report, where the second report includes at least one of the following: a reference signal index, and a measurement result;
   indication information for indicating a network-side device to trigger beam measurement and reporting;
   indication information of a downlink reference signal;
   indication information for triggering uplink beam measurement;
   indication information of an uplink reference signal; and
   first information.

Optionally, the first information includes at least one of the following:
a transmission configuration indicator TCI state identifier;
an uplink transmission configuration indicator TCI-UL state identifier;
a TCI codepoint identifier;
spatial relation information;
a reference signal index; and
terminal assistance information.

Optionally, the indication information of the first target uplink resource includes at least one of the following:
time domain offset information between the first target uplink resource and the second target uplink resource, or time domain position information of the first target uplink resource;
frequency domain offset information between the first target uplink resource and the second target uplink resource, or frequency domain position information of the first target uplink resource; and
an identifier of the first target uplink resource.

Optionally, the determining a first target uplink resource includes at least one of the following:
determining the first target uplink resource in an uplink resource scheduled by the network-side device and dedicated to the first reporting information;
determining the first target uplink resource in a reporting resource associated with a third report, where the reporting resource associated with the third report is configured, indicated, or activated by the network-side device;
determining the first target uplink resource based on the second reporting information; and
determining the first target uplink resource based on the network pre-configured uplink resource.

Optionally, the determining the first target uplink resource based on a network pre-configured uplink resource includes: determining an uplink resource satisfying at least one of the following conditions within the network pre-configured uplink resource as the first target uplink resource:
an uplink resource whose 1st symbol is not earlier than the last symbol of the second target uplink resource;
an uplink resource whose 1st symbol is closest to the last symbol of the second target uplink resource;
an uplink resource for which a time domain interval between the 1st symbol of the uplink resource and the last symbol of the second target uplink resource is not less than a first time interval; and
an uplink resource capable of carrying reporting content.

Optionally, the first time interval includes at least one of the following:
a time required to complete CSI measurement or beam measurement;
a PUSCH preparation time;
a time for performing data processing on the reporting content; where optionally, data processing may include generation, assembly, or the like; and
a time required to map the reporting content to a physical resource.

Optionally, before the determining the first target uplink resource based on a network pre-configured uplink resource, the network pre-configured uplink resource is determined in at least one of the following manners:
determining a network pre-configured reporting resource based on an uplink resource configured by the network and dedicated to the terminal; and
determining a network pre-configured reporting resource based on a common uplink resource configured by the network.

Optionally, the third report satisfies at least one of the following:
the third report is associated with the first reporting information;
in configuration information of the third report, a measurement resource configuration associated with the third report is absent or disabled;
in reporting configuration in configuration information of the third report, all reporting-related configurations except the reporting resource are absent or disabled; and
a channel state information CSI time requirement is disabled for the third report.

Optionally, the sending second reporting information based on a second target uplink resource includes:
in a case that the second target uplink resource overlaps with a first uplink resource, sending the second reporting information on the second target uplink resource, and skipping sending first uplink information on the second target uplink resource and the first uplink resource;
   or
in a case that the second target uplink resource overlaps with a first uplink resource, performing multiplexing transmission of the second reporting information and first uplink information on the second target uplink resource, and skipping sending information on the first uplink resource;
   or
in a case that the second target uplink resource overlaps with a first uplink resource, performing multiplexing transmission of the second reporting information and first uplink information on the first uplink resource, and skipping sending information on the second target uplink resource;
   or
in a case that the second target uplink resource overlaps with a first uplink resource, sending first uplink information on the first uplink resource, and skipping sending the second reporting information on the first uplink resource and the second target uplink resource; where
the first uplink information is uplink information carried on the first uplink resource.

Optionally, in a case that the second target uplink resource overlaps with the first uplink resource, the first uplink information is sent on the first uplink resource, and the second reporting information is not sent on the first uplink resource or the second target uplink resource, the first reporting information is not sent on the first target uplink resource.

Optionally, the reporting first reporting information based on the first target uplink resource includes:
in a case that the first target uplink resource overlaps with a second uplink resource, sending the first reporting information on the first target uplink resource, and skipping sending second uplink information on the first target uplink resource and the second uplink resource;
   or
in a case that the first target uplink resource overlaps with a second uplink resource, performing multiplexing transmission of the first reporting information and second uplink information on the first target uplink resource, and skipping sending information on the second uplink resource;
   or
in a case that the first target uplink resource overlaps with a second uplink resource, performing multiplexing transmission of the first reporting information and second uplink information on the second uplink resource, and skipping sending information on the first target uplink resource;
   or
in a case that the first target uplink resource overlaps with a second uplink resource, sending second uplink information on the second uplink resource, and skipping sending the first reporting information on the first target uplink resource and the second uplink resource; where
the second uplink information is uplink information carried on the second uplink resource.

Optionally, the multiplexing transmission satisfies at least one of the following:
multiplexing is performed through puncturing;
multiplexing is performed through rate matching;
multiplexing is performed through bit addition;
multiplexing is performed according to a priority rule; and
at least two multiplexed pieces of information are associated with different cyclic shifts.

Optionally, the reporting first reporting information based on the first target uplink resource includes:
reporting the first reporting information based on the first target uplink resource in a case that a first condition is satisfied.

Optionally, the apparatus further includes:
a measurement module configured to, in a case that a second condition is satisfied, perform, for the terminal, the first measurement; and
a third reporting module configured to, in a case that a measurement result of the first measurement satisfies a third condition, report third reporting information related to the measurement result; or in a case that the measurement result of the first measurement does not satisfy the third condition, skip reporting the third reporting information related to the measurement result, or report fourth reporting information, where the fourth reporting information includes at least one of the following:
   indication information for triggering downlink beam measurement;
   indication information of a downlink reference signal;
   indication information for triggering uplink beam measurement; and
   indication information of an uplink reference signal.

Optionally, at least one of the first reporting information and the second reporting information is reported as a new type of uplink control information UCI; or at least one of the first reporting information and the second reporting information is reported as CSI.

Optionally, the apparatus further includes:
a receiving module configured to receive configuration information sent by the network-side device, where the configuration information is used for configuring at least one of the following:
the terminal selectively performing information reporting; and
a third target uplink resource, where the third target uplink resource is at least one of the first target uplink resource and the second target uplink resource, and includes at least one of a periodic physical uplink control channel PUCCH, a configured grant physical uplink shared channel CG-PUSCH resource, a semi-persistent PUSCH resource, and an aperiodic PUSCH resource.

The foregoing information reporting apparatus can reduce terminal power consumption.

The information reporting apparatus in the embodiments of this application may be an electronic device, such as an electronic device having an operating system, or a component in an electronic device, such as an integrated circuit or a chip. For example, the electronic device may be a terminal, or may be another device different from a terminal. For example, the terminal may include but is not limited to the types of terminals listed in the embodiments of this application, and the another device may be a server, a network attached storage (Network Attached Storage, NAS), or the like, which are not specifically limited in the embodiments of this application.

The information reporting apparatus according to the embodiments of this application can implement the processes implemented by the method embodiment shown in FIG. 2, with the same technical effects achieved. To avoid repetition, details are not described herein again.

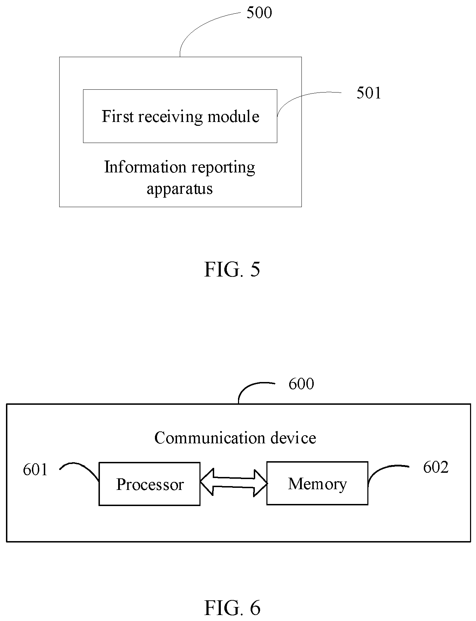

Referring to FIG. 5, FIG. 5 is a structural diagram of another information reporting apparatus according to an embodiment of this application. As shown in FIG. 5, the information reporting apparatus 500 includes:
a first receiving module 501 configured to receive first reporting information reported by a terminal based on the first target uplink resource, where the first reporting information is triggered for reporting by the terminal, or a first measurement associated with the first reporting information is triggered by the terminal.

Optionally, in a case that the first measurement associated with the first reporting information is triggered by the terminal, the first reporting information is obtained based on the first measurement triggered by the terminal.

Optionally, the first reporting information includes at least one of the following:
indication information indicating that the terminal triggers reporting;
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information.

Optionally, the apparatus further includes:
a second receiving module configured to receive second reporting information reported by the terminal based on a second target uplink resource.

Optionally, the second reporting information is a scheduling request dedicated to the terminal-triggered reporting of the first reporting information, and the second target uplink resource is an uplink resource configured by a network side for carrying the second reporting information.

Optionally, the first target uplink resource and the second target uplink resource belong to a same channel resource; or
the first target uplink resource and the second target uplink resource belong to different channel resources.

Optionally, the first reporting information includes at least one of the following:
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information;
   or
the second reporting information includes at least one of the following:
   indication information indicating that the terminal triggers reporting;
   indication information used for indicating whether the first report exists;
   indication information used for indicating a size of the first report;
   indication information of the first target uplink resource;
   a second report, where the second report includes at least one of the following: a reference signal index, and a measurement result;
   indication information for indicating a network-side device to trigger beam measurement and reporting;
   indication information of a downlink reference signal;
   indication information for triggering uplink beam measurement;
   indication information of an uplink reference signal; and
   first information.

Optionally, the first information includes at least one of the following:
a transmission configuration indicator TCI state identifier;
an uplink transmission configuration indicator TCI-UL state identifier;
a TCI codepoint identifier;
spatial relation information;
a reference signal index; and
terminal assistance information.

Optionally, the indication information of the first target uplink resource includes at least one of the following:
time domain offset information between the first target uplink resource and the second target uplink resource, or time domain position information of the first target uplink resource;
frequency domain offset information between the first target uplink resource and the second target uplink resource, or frequency domain position information of the first target uplink resource; and
an identifier of the first target uplink resource.

Optionally, the first target uplink resource includes at least one of the following:
a first target uplink resource determined in an uplink resource scheduled by the network-side device and dedicated to the first reporting information;
a first target uplink resource determined in a reporting resource associated with a third report, where the reporting resource associated with the third report is configured, indicated, or activated by the network-side device;
the first target uplink resource determined based on the second reporting information; and
a first target uplink resource determined based on a network pre-configured uplink resource.

Optionally, the first target uplink resource determined based on the network pre-configured uplink resource includes: an uplink resource satisfying at least one of the following conditions in the network pre-configured uplink resource:
an uplink resource whose 1st symbol is not earlier than the last symbol of the second target uplink resource;
an uplink resource whose 1st symbol is closest to the last symbol of the second target uplink resource;
an uplink resource for which a time domain interval between the 1st symbol of the uplink resource and the last symbol of the second target uplink resource is not less than a first time interval; and
an uplink resource capable of carrying reporting content.

Optionally, the first time interval includes at least one of the following:
a time required to complete CSI measurement or beam measurement;
a PUSCH preparation time;
a time for performing data processing on the reporting content; where optionally, data processing includes generation, assembly, or the like; and
a time required to map the reporting content to a physical resource.

Optionally, the network pre-configured uplink resource includes at least one of the following:
a network pre-configured reporting resource determined based on an uplink resource configured by the network and dedicated to the terminal; and
a network pre-configured reporting resource determined based on a common uplink resource configured by the network.

Optionally, the third report satisfies at least one of the following:
the third report is associated with the first reporting information;
in configuration information of the third report, a measurement resource configuration associated with the third report is absent or disabled;
in reporting configuration in configuration information of the third report, all reporting-related configurations except the reporting resource are absent or disabled; and
a channel state information CSI time requirement is disabled for the third report.

Optionally, at least one of the first reporting information and the second reporting information is reported as a new type of uplink control information UCI; or at least one of the first reporting information and the second reporting information is reported as CSI.

Optionally, the apparatus further includes:
a sending module configured to send configuration information to the terminal, where the configuration information is used for configuring at least one of the following:
the terminal selectively performing information reporting; and
a third target uplink resource, where the third target uplink resource is at least one of the first target uplink resource and the second target uplink resource, and includes at least one of a periodic physical uplink control channel PUCCH, a configured grant physical uplink shared channel CG-PUSCH resource, a semi-persistent PUSCH resource, and an aperiodic PUSCH resource.

The foregoing information reporting apparatus can reduce terminal power consumption.

The information reporting apparatus in the embodiments of this application may be an electronic device, such as an electronic device having an operating system, or a component in an electronic device, such as an integrated circuit or a chip. The electronic device may be a terminal or a network-side device.

The information reporting apparatus according to the embodiments of this application can implement the processes implemented by the method embodiment shown in FIG. 3, with the same technical effects achieved. To avoid repetition, details are not described herein again.

Optionally, as shown in FIG. 6, an embodiment of this application further provides a communication device 600 including a processor 601 and a memory 602, where the memory 602 stores a program or instructions capable of running on the processor 601. For example, in a case that the communication device 600 is a terminal, the program or instructions, when executed by the processor 601, implements the steps of the foregoing information reporting method embodiment, with the same technical effects achieved. To avoid repetition, details are not described herein again.

An embodiment of this application further provides a communication device including a processor and a communication interface, where the processor is configured to determine a first target uplink resource; and the communication interface is configured to report first reporting information based on the first target uplink resource, where the first reporting information is triggered for reporting by the terminal, or a first measurement associated with the first reporting information is triggered by the terminal. This communication device embodiment corresponds to the foregoing information reporting method embodiment, and the implementation processes and implementations of the foregoing method embodiment can all be applied to this communication device embodiment, with the same technical effects achieved.

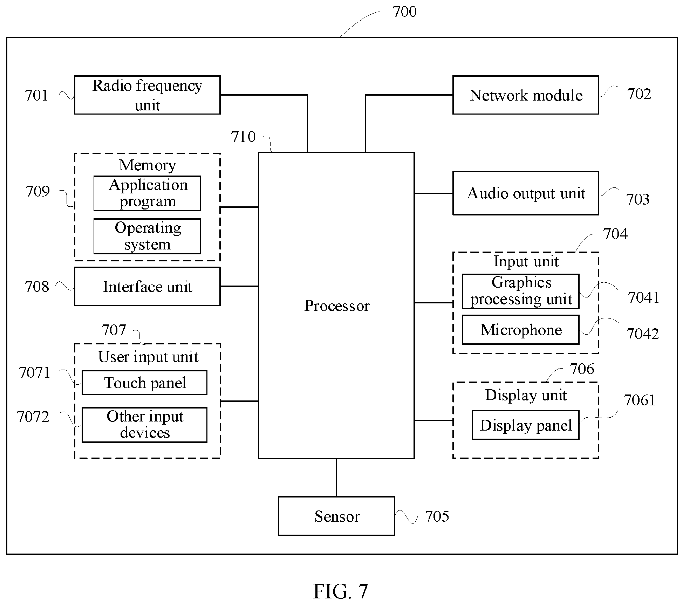

Specifically, FIG. 7 is a schematic diagram of a hardware structure of a terminal implementing an embodiment of this application.

The terminal 700 includes but is not limited to at least some components of: a radio frequency unit 701, a network module 702, an audio output unit 703, an input unit 704, a sensor 705, a display unit 706, a user input unit 707, an interface unit 708, a memory 709, and a processor 710.

Those skilled in the art can understand that the terminal 700 may further include a power supply (such as a battery) supplying power to the components, and the power supply may be logically connected to the processor 710 through a power management system, so as to implement functions such as charging management, discharging management, and power consumption management by using the power management system. The structure of the terminal shown in FIG. 7 does not constitute any limitation on the terminal. The terminal may include more or fewer components than shown in the figure, or a combination of some components, or the components disposed differently. Details are not described herein.

It should be understood that in the embodiments of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in the form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function key (such as a volume control key or an on/off key), a trackball, a mouse, and a joystick. Details are not described herein.

In the embodiments of this application, after receiving downlink data from a network-side device, the radio frequency unit 701 may transmit the received downlink data to the processor 710 for processing. In addition, the radio frequency unit 701 may send uplink data to the network-side device. Typically, the radio frequency unit 701 includes but is not limited to an antenna, an amplifier, a transceiver, a coupler, a low noise amplifier, and a duplexer.

The memory 709 may be configured to store a software program or instructions and various data. The memory 709 may mainly include a first storage area for storing programs or instructions and a second storage area for storing data. The first storage area may store an operating system, an application program or instructions required by at least one function (for example, a sound play function or an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synch link dynamic random access memory (Synch link DRAM, SLDRAM), or a direct rambus random access memory (Direct Rambus RAM, DRRAM). The memory 709 in the embodiments of this application includes but is not limited to these and any other suitable types of memory.

The processor 710 may include one or more processing units. Optionally, the processor 710 integrates an application processor and a modem processor. The application processor mainly processes operations related to an operating system, a user interface, an application program, or the like. The modem processor, such as a baseband processor, mainly processes radio communication signals. It can be understood that the modem processor may alternatively be not integrated into the processor 710.

The processor 710 is configured to determine a first target uplink resource; and
the radio frequency unit 701 is configured to report first reporting information based on the first target uplink resource, where the first reporting information is triggered for reporting by the terminal, or a first measurement associated with the first reporting information is triggered by the terminal.

Optionally, in a case that the first measurement associated with the first reporting information is triggered by the terminal, the first reporting information is obtained based on the first measurement triggered by the terminal.

Optionally, the first reporting information includes at least one of the following:
indication information indicating that the terminal triggers reporting;
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information.

Optionally, before determining the first target uplink resource, the radio frequency unit 701 is further configured to:
report second reporting information based on a second target uplink resource.

Optionally, the second reporting information is a scheduling request dedicated to the terminal-triggered reporting of the first reporting information, and the second target uplink resource is an uplink resource configured by a network side for carrying the second reporting information.

Optionally, the first target uplink resource and the second target uplink resource belong to a same channel resource; or
the first target uplink resource and the second target uplink resource belong to different channel resources.

Optionally, the first reporting information includes at least one of the following:
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information;
   or
the second reporting information includes at least one of the following:
   indication information indicating that the terminal triggers reporting;
   indication information used for indicating whether the first report exists;
   indication information used for indicating a size of the first report;
   indication information of the first target uplink resource;
   a second report, where the second report includes at least one of the following: a reference signal index, and a measurement result;
   indication information for indicating a network-side device to trigger beam measurement and reporting;
   indication information of a downlink reference signal;
   indication information for triggering uplink beam measurement;
   indication information of an uplink reference signal; and
   first information.

Optionally, the first information includes at least one of the following:
a transmission configuration indicator TCI state identifier;
an uplink transmission configuration indicator TCI-UL state identifier;
a TCI codepoint identifier;
spatial relation information;
a reference signal index; and
terminal assistance information.

Optionally, the indication information of the first target uplink resource includes at least one of the following:
time domain offset information between the first target uplink resource and the second target uplink resource, or time domain position information of the first target uplink resource;
frequency domain offset information between the first target uplink resource and the second target uplink resource, or frequency domain position information of the first target uplink resource; and
an identifier of the first target uplink resource.

Optionally, the determining a first target uplink resource includes at least one of the following:
determining the first target uplink resource in an uplink resource scheduled by the network-side device and dedicated to the first reporting information;
determining the first target uplink resource in a reporting resource associated with a third report, where the reporting resource associated with the third report is configured, indicated, or activated by the network-side device;
determining the first target uplink resource based on the second reporting information; and
determining the first target uplink resource based on the network pre-configured uplink resource.

Optionally, the determining the first target uplink resource based on a network pre-configured uplink resource includes: determining an uplink resource satisfying at least one of the following conditions within the network pre-configured uplink resource as the first target uplink resource:
an uplink resource whose 1st symbol is not earlier than the last symbol of the second target uplink resource;
an uplink resource whose 1st symbol is closest to the last symbol of the second target uplink resource;
an uplink resource for which a time domain interval between the 1st symbol of the uplink resource and the last symbol of the second target uplink resource is not less than a first time interval; and
an uplink resource capable of carrying reporting content.

Optionally, the first time interval includes at least one of the following:
a time required to complete CSI measurement or beam measurement;
a PUSCH preparation time;
a time for performing data processing on the reporting content; where optionally, data processing includes generation, assembly, or the like; and
a time required to map the reporting content to a physical resource.

Optionally, before the determining the first target uplink resource based on a network pre-configured uplink resource, the network pre-configured uplink resource is determined in at least one of the following manners:
determining a network pre-configured reporting resource based on an uplink resource configured by the network and dedicated to the terminal; and
determining a network pre-configured reporting resource based on a common uplink resource configured by the network.

Optionally, the third report satisfies at least one of the following:
the third report is associated with the first reporting information;
in configuration information of the third report, a measurement resource configuration associated with the third report is absent or disabled;
in reporting configuration in configuration information of the third report, all reporting-related configurations except the reporting resource are absent or disabled; and
a channel state information CSI time requirement is disabled for the third report.

Optionally, the sending second reporting information based on a second target uplink resource includes:
in a case that the second target uplink resource overlaps with a first uplink resource, sending the second reporting information on the second target uplink resource, and skipping sending first uplink information on the second target uplink resource and the first uplink resource;
   or
in a case that the second target uplink resource overlaps with a first uplink resource, performing multiplexing transmission of the second reporting information and first uplink information on the second target uplink resource, and skipping sending information on the first uplink resource;
   or
in a case that the second target uplink resource overlaps with a first uplink resource, performing multiplexing transmission of the second reporting information and first uplink information on the first uplink resource, and skipping sending information on the second target uplink resource;
   or
in a case that the second target uplink resource overlaps with a first uplink resource, sending first uplink information on the first uplink resource, and skipping sending the second reporting information on the first uplink resource and the second target uplink resource; where
the first uplink information is uplink information carried on the first uplink resource.

Optionally, in a case that the second target uplink resource overlaps with the first uplink resource, the first uplink information is sent on the first uplink resource, and the second reporting information is not sent on the first uplink resource or the second target uplink resource, the first reporting information is not sent on the first target uplink resource.

Optionally, the reporting first reporting information based on the first target uplink resource includes:
in a case that the first target uplink resource overlaps with a second uplink resource, sending the first reporting information on the first target uplink resource, and skipping sending second uplink information on the first target uplink resource and the second uplink resource;
   or
in a case that the first target uplink resource overlaps with a second uplink resource, performing multiplexing transmission of the first reporting information and second uplink information on the first target uplink resource, and skipping sending information on the second uplink resource;
   or
in a case that the first target uplink resource overlaps with a second uplink resource, performing multiplexing transmission of the first reporting information and second uplink information on the second uplink resource, and skipping sending information on the first target uplink resource;
   or
in a case that the first target uplink resource overlaps with a second uplink resource, sending second uplink information on the second uplink resource, and skipping sending the first reporting information on the first target uplink resource and the second uplink resource; where
the second uplink information is uplink information carried on the second uplink resource.

Optionally, the multiplexing transmission satisfies at least one of the following:
multiplexing is performed through puncturing;
multiplexing is performed through rate matching;
multiplexing is performed through bit addition;
multiplexing is performed according to a priority rule; and
at least two multiplexed pieces of information are associated with different cyclic shifts.

Optionally, the reporting first reporting information based on the first target uplink resource includes:
reporting the first reporting information based on the first target uplink resource in a case that a first condition is satisfied.

Optionally, in a case that the first measurement associated with the first reporting information is triggered by the terminal, the radio frequency unit 701 is further configured to:
in a case that a second condition is satisfied, perform the first measurement; and
in a case that a measurement result of the first measurement satisfies a third condition, report third reporting information related to the measurement result; or in a case that the measurement result of the first measurement does not satisfy the third condition, skip reporting the third reporting information related to the measurement result, or report fourth reporting information, where the fourth reporting information includes at least one of the following:
   indication information for triggering downlink beam measurement;
   indication information of a downlink reference signal;
   indication information for triggering uplink beam measurement; and
   indication information of an uplink reference signal.

Optionally, at least one of the first reporting information and the second reporting information is reported as a new type of uplink control information UCI; or at least one of the first reporting information and the second reporting information is reported as CSI.

Optionally, the radio frequency unit 701 is further configured to:
receive configuration information sent by the network-side device, where the configuration information is used for configuring at least one of the following:
selectively performing information reporting; and
a third target uplink resource, where the third target uplink resource is at least one of the first target uplink resource and the second target uplink resource, and includes at least one of a periodic physical uplink control channel PUCCH, a configured grant physical uplink shared channel CG-PUSCH resource, a semi-persistent PUSCH resource, and an aperiodic PUSCH resource.

The foregoing terminal can reduce terminal power consumption.

It can be understood that for the implementation processes of various implementations mentioned in this embodiment, reference may be made to the relevant description of the foregoing information reporting method, and the same or corresponding technical effects can be achieved. To avoid repetition, details are not described herein again.

An embodiment of this application further provides a device including a processor and a communication interface, where the communication interface is coupled to the processor, and the processor is configured to run a program or instructions to implement the steps of the method embodiment shown in FIG. 3. This device embodiment corresponds to the foregoing information reporting method embodiment, and the implementation processes and implementations of the foregoing method embodiment can all be applied to this device embodiment, with the same technical effects achieved.

An embodiment of this application further provides a device including a processor and a communication interface, where the communication interface is configured to receive first reporting information reported by a terminal based on the first target uplink resource, where the first reporting information is triggered for reporting by the terminal, or a first measurement associated with the first reporting information is triggered by the terminal.

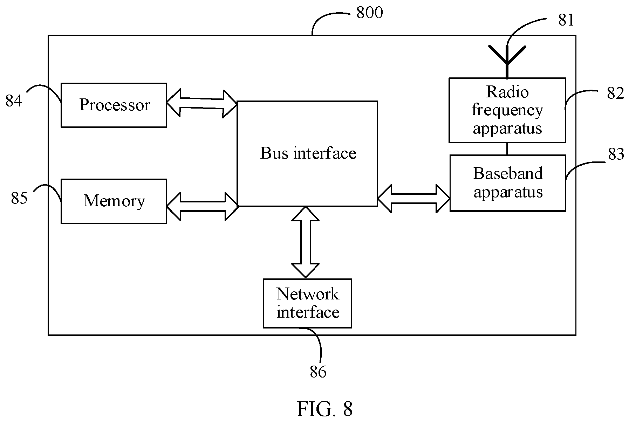

Specifically, an embodiment of this application further provides a device. As shown in FIG. 8, the device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information via the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information out via the antenna 81.

The information reporting method in the foregoing embodiments may be implemented in the baseband apparatus 83, and the baseband apparatus 83 includes a baseband processor.

The baseband apparatus 83 may include, for example, at least one baseband board, where multiple chips are disposed on the baseband board. As shown in FIG. 8, one chip is, for example, a baseband processor, and connected to the memory 85 via a bus interface, to invoke the program in the memory 85 to perform the operations of the network device shown in the foregoing method embodiments.

The device may further include a network interface 86. The interface is, for example, a common public radio interface (Common Public Radio Interface, CPRI).

Specifically, the device 800 in the embodiment of this application further includes: instructions or a program stored on the memory 85 and capable of running on the processor 84. The processor 84 invokes the instructions or program in the memory 85 to execute the method performed by each module shown in FIG. 5, with the same technical effects achieved. To avoid repetition, details are not described herein again.

The radio frequency apparatus 82 is configured to receive first reporting information reported by a terminal based on the first target uplink resource, where the first reporting information is triggered for reporting by the terminal, or a first measurement associated with the first reporting information is triggered by the terminal.

Optionally, in a case that the first measurement associated with the first reporting information is triggered by the terminal, the first reporting information is obtained based on the first measurement triggered by the terminal.

Optionally, the first reporting information includes at least one of the following:
indication information indicating that the terminal triggers reporting;
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information.

Optionally, the radio frequency apparatus 82 is further configured to: receive second reporting information reported by the terminal based on a second target uplink resource.

Optionally, the second reporting information is a scheduling request dedicated to the terminal-triggered reporting of the first reporting information, and the second target uplink resource is an uplink resource configured by a network side for carrying the second reporting information.

Optionally, the first target uplink resource and the second target uplink resource belong to a same channel resource; or
the first target uplink resource and the second target uplink resource belong to different channel resources.

Optionally, the first reporting information includes at least one of the following:
a first report, where the first report includes at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information;
   or
the second reporting information includes at least one of the following:
   indication information indicating that the terminal triggers reporting;
   indication information used for indicating whether the first report exists;
   indication information used for indicating a size of the first report;
   indication information of the first target uplink resource;
   a second report, where the second report includes at least one of the following: a reference signal index, and a measurement result;
   indication information for indicating a network-side device to trigger beam measurement and reporting;
   indication information of a downlink reference signal;
   indication information for triggering uplink beam measurement;
   indication information of an uplink reference signal; and
   first information.

Optionally, the first information includes at least one of the following:
a transmission configuration indicator TCI state identifier;
an uplink transmission configuration indicator TCI-UL state identifier;
a TCI codepoint identifier;
spatial relation information;
a reference signal index; and
terminal assistance information.

Optionally, the indication information of the first target uplink resource includes at least one of the following:
time domain offset information between the first target uplink resource and the second target uplink resource, or time domain position information of the first target uplink resource;
frequency domain offset information between the first target uplink resource and the second target uplink resource, or frequency domain position information of the first target uplink resource; and
an identifier of the first target uplink resource.

Optionally, the first target uplink resource includes at least one of the following:
a first target uplink resource determined in an uplink resource scheduled by the network-side device and dedicated to the first reporting information;
a first target uplink resource determined in a reporting resource associated with a third report, where the reporting resource associated with the third report is configured, indicated, or activated by the network-side device;
the first target uplink resource determined based on the second reporting information; and
a first target uplink resource determined based on a network pre-configured uplink resource.

Optionally, the first target uplink resource determined based on the network pre-configured uplink resource includes: an uplink resource satisfying at least one of the following conditions in the network pre-configured uplink resource:
an uplink resource whose 1st symbol is not earlier than the last symbol of the second target uplink resource;
an uplink resource whose 1st symbol is closest to the last symbol of the second target uplink resource;
an uplink resource for which a time domain interval between the 1st symbol of the uplink resource and the last symbol of the second target uplink resource is not less than a first time interval; and
an uplink resource capable of carrying reporting content.

Optionally, the first time interval includes at least one of the following:
a time required to complete CSI measurement or beam measurement;
a PUSCH preparation time;
a time for performing data processing on the reporting content; where optionally, data processing includes generation, assembly, or the like; and
a time required to map the reporting content to a physical resource. Optionally, the network pre-configured uplink resource includes at least one of the following:
a network pre-configured reporting resource determined based on an uplink resource configured by the network and dedicated to the terminal; and
a network pre-configured reporting resource determined based on a common uplink resource configured by the network.

Optionally, the third report satisfies at least one of the following:
the third report is associated with the first reporting information;
in configuration information of the third report, a measurement resource configuration associated with the third report is absent or disabled;
in reporting configuration in configuration information of the third report, all reporting-related configurations except the reporting resource are absent or disabled; and
a channel state information CSI time requirement is disabled for the third report.

Optionally, at least one of the first reporting information and the second reporting information is reported as a new type of uplink control information UCI; or at least one of the first reporting information and the second reporting information is reported as CSI.

Optionally, the radio frequency apparatus 82 is further configured to: send configuration information to the terminal, where the configuration information is used for configuring at least one of the following:
the terminal selectively performing information reporting; and
a third target uplink resource, where the third target uplink resource is at least one of the first target uplink resource and the second target uplink resource, and includes at least one of a periodic physical uplink control channel PUCCH, a configured grant physical uplink shared channel CG-PUSCH resource, a semi-persistent PUSCH resource, and an aperiodic PUSCH resource.

The foregoing device can reduce terminal power consumption.

It can be understood that for the implementation processes of various implementations mentioned in this embodiment, reference may be made to the relevant descriptions of the foregoing method embodiments, and the same or corresponding technical effects can be achieved. To avoid repetition, details are not described herein again.

An embodiment of this application further provides a readable storage medium, where the readable storage medium stores a program or instructions. When the program or instructions are executed by a processor, the processes of the foregoing information reporting method embodiments are implemented, with the same technical effects achieved. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or a compact disc. In some examples, the readable storage medium may be a non-transitory readable storage medium.

An embodiment of this application further provides a chip. The chip includes a processor and a communication interface, where the communication interface is coupled to the processor, and the processor is configured to run a program or instructions to implement the processes of the foregoing information reporting method embodiments, with the same technical effects achieved. To avoid repetition, details are not described herein again. It should be understood that the chip mentioned in the embodiments of this application may also be referred to as a system-level chip, a system chip, a chip system, a system on chip, or the like.

An embodiment of this application further provides a computer program/program product, where the computer program/program product is stored in a storage medium, and the computer program/program product is executed by at least one processor to implement the processes of the foregoing information reporting method embodiments, with the same technical effects achieved. To avoid repetition, details are not described herein again.

An embodiment of this application further provides a wireless communication system including: a terminal and a network-side device, where the terminal may be configured to perform the steps of the information reporting method on the terminal side according to the embodiments of this application, and the network-side device may be configured to perform the steps of the information reporting method on the network-side device side according to the embodiments of this application.

It should be noted that in this specification, the terms "include", "comprise", or any of their variants are intended to cover a non-exclusive inclusion, such that a process, method, article, or apparatus that includes a series of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, those skilled in the art may clearly understand that the method in the foregoing embodiments may be implemented by a computer software product with a necessary general hardware platform. Certainly, the method in the foregoing embodiments may also be implemented by hardware. The computer software product is stored in a storage medium (such as a ROM, a RAM, a magnetic disk, or a compact disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other implementations without departing from principles of this application and the protection scope of the claims, and all such implementations shall fall within the protection scope of this application.

## Claims

1. An information reporting method, comprising:
determining, by a terminal, a first target uplink resource; and
reporting, by the terminal, first reporting information based on the first target uplink resource, wherein the first reporting information is triggered for reporting by the terminal, or a first measurement associated with the first reporting information is triggered by the terminal.

2. The method according to claim 1, wherein in a case that the first measurement associated with the first reporting information is triggered by the terminal, the first reporting information is obtained based on the first measurement triggered by the terminal.

3. The method according to claim 1 or 2, wherein the first reporting information comprises at least one of the following:
indication information indicating that the terminal triggers reporting;
a first report, wherein the first report comprises at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information.

4. The method according to claim 1 or 2, wherein before the determining, by a terminal, a first target uplink resource, the method further comprises:
reporting, by the terminal, second reporting information based on a second target uplink resource.

5. The method according to claim 4, wherein the second reporting information is a scheduling request dedicated to the terminal-triggered reporting of the first reporting information, and the second target uplink resource is an uplink resource configured by a network side for carrying the second reporting information.

6. The method according to claim 4 or 5, wherein the first target uplink resource and the second target uplink resource belong to a same channel resource; or
the first target uplink resource and the second target uplink resource belong to different channel resources.

7. The method according to any one of claims 4 to 6, wherein the first reporting information comprises at least one of the following:
a first report, wherein the first report comprises at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information;
or
the second reporting information comprises at least one of the following:
indication information indicating that the terminal triggers reporting;
indication information used for indicating whether the first report exists;
indication information used for indicating a size of the first report;
indication information of the first target uplink resource;
a second report, wherein the second report comprises at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information.

8. The method according to claim 3 or 7, wherein the first information comprises at least one of the following:
a transmission configuration indicator TCI state identifier;
an uplink transmission configuration indicator TCI-UL state identifier;
a TCI codepoint identifier;
spatial relation information;
a reference signal index; and
terminal assistance information.

9. The method according to claim 7, wherein the indication information of the first target uplink resource comprises at least one of the following:
time domain offset information between the first target uplink resource and the second target uplink resource, or time domain position information of the first target uplink resource;
frequency domain offset information between the first target uplink resource and the second target uplink resource, or frequency domain position information of the first target uplink resource; and
an identifier of the first target uplink resource.

10. The method according to any one of claims 4 to 9, wherein the determining, by a terminal, a first target uplink resource comprises at least one of the following:
determining, by the terminal, the first target uplink resource in an uplink resource scheduled by the network-side device and dedicated to the first reporting information;
determining, by the terminal, the first target uplink resource in a reporting resource associated with a third report, wherein the reporting resource associated with the third report is configured, indicated, or activated by the network-side device;
determining, by the terminal, the first target uplink resource based on the second reporting information; and
determining, by the terminal, the first target uplink resource based on a network pre-configured uplink resource.

11. The method according to claim 10, wherein the determining, by the terminal, the first target uplink resource based on a network pre-configured uplink resource comprises: determining, by the terminal, an uplink resource satisfying at least one of the following conditions within the network pre-configured uplink resource as the first target uplink resource:
an uplink resource whose 1st symbol is not earlier than the last symbol of the second target uplink resource;
an uplink resource whose 1st symbol is closest to the last symbol of the second target uplink resource;
an uplink resource for which a time domain interval between the 1st symbol of the uplink resource and the last symbol of the second target uplink resource is not less than a first time interval; and
an uplink resource capable of carrying reporting content.

12. The method according to claim 11, wherein the first time interval comprises at least one of the following:
a time required for the terminal to complete CSI measurement or beam measurement;
a PUSCH preparation time of the terminal;
a time for the terminal to perform data processing on the reporting content; and
a time required for the terminal to map the reporting content to a physical resource.

13. The method according to claim 10, wherein before the determining, by the terminal, the first target uplink resource based on a network pre-configured uplink resource, the terminal determines the network pre-configured uplink resource in at least one of the following manners:
the terminal determines a network pre-configured reporting resource based on an uplink resource configured by the network and dedicated to the terminal; and
the terminal determines a network pre-configured reporting resource based on a common uplink resource configured by the network.

14. The method according to claim 10, wherein the third report satisfies at least one of the following:
the third report is associated with the first reporting information;
in configuration information of the third report, a measurement resource configuration associated with the third report is absent or disabled;
in reporting configuration in configuration information of the third report, all reporting-related configurations except the reporting resource are absent or disabled; and
a channel state information CSI time requirement is disabled for the third report.

15. The method according to any one of claims 4 to 14, wherein the reporting, by the terminal, second reporting information based on a second target uplink resource comprises:
in a case that the second target uplink resource overlaps with a first uplink resource, sending the second reporting information on the second target uplink resource, and skipping sending first uplink information on the second target uplink resource and the first uplink resource;
or
in a case that the second target uplink resource overlaps with a first uplink resource, performing multiplexing transmission of the second reporting information and first uplink information on the second target uplink resource, and skipping sending information on the first uplink resource;
or
in a case that the second target uplink resource overlaps with a first uplink resource, performing multiplexing transmission of the second reporting information and first uplink information on the first uplink resource, and skipping sending information on the second target uplink resource;
or
in a case that the second target uplink resource overlaps with a first uplink resource, sending first uplink information on the first uplink resource, and skipping sending the second reporting information on the first uplink resource and the second target uplink resource; wherein
the first uplink information is uplink information carried on the first uplink resource.

16. The method according to claim 15, wherein in a case that the second target uplink resource overlaps with the first uplink resource, the first uplink information is sent on the first uplink resource, and the second reporting information is not sent on the first uplink resource or the second target uplink resource, the first reporting information is not sent on the first target uplink resource.

17. The method according to any one of claims 1 to 16, wherein the reporting, by the terminal, first reporting information based on the first target uplink resource comprises:
in a case that the first target uplink resource overlaps with a second uplink resource, sending the first reporting information on the first target uplink resource, and skipping sending second uplink information on the first target uplink resource and the second uplink resource;
or
in a case that the first target uplink resource overlaps with a second uplink resource, performing multiplexing transmission of the first reporting information and second uplink information on the first target uplink resource, and skipping sending information on the second uplink resource;
or
in a case that the first target uplink resource overlaps with a second uplink resource, performing multiplexing transmission of the first reporting information and second uplink information on the second uplink resource, and skipping sending information on the first target uplink resource;
or
in a case that the first target uplink resource overlaps with a second uplink resource, sending second uplink information on the second uplink resource, and skipping sending the first reporting information on the first target uplink resource and the second uplink resource; wherein
the second uplink information is uplink information carried on the second uplink resource.

18. The method according to any one of claims 15 to 17, wherein the multiplexing transmission satisfies at least one of the following:
multiplexing is performed through puncturing;
multiplexing is performed through rate matching;
multiplexing is performed through bit addition;
multiplexing is performed according to a priority rule; and
at least two multiplexed pieces of information are associated with different cyclic shifts.

19. The method according to any one of claims 1 to 18, wherein the reporting, by the terminal, first reporting information based on the first target uplink resource comprises:
reporting, by the terminal, the first reporting information based on the first target uplink resource in a case that a first condition is satisfied.

20. The method according to any one of claims 1 to 19, wherein in a case that the first measurement associated with the first reporting information is triggered by the terminal, the method further comprises:
in a case that a second condition is satisfied, performing, by the terminal, the first measurement; and
in a case that a measurement result of the first measurement satisfies a third condition, reporting, by the terminal, third reporting information related to the measurement result; or in a case that the measurement result of the first measurement does not satisfy the third condition, skipping reporting, by the terminal, the third reporting information related to the measurement result, or reporting fourth reporting information, wherein the fourth reporting information comprises at least one of the following:
indication information for triggering downlink beam measurement;
indication information of a downlink reference signal;
indication information for triggering uplink beam measurement; and
indication information of an uplink reference signal.

21. The method according to any one of claims 1 to 20, wherein at least one of the first reporting information and the second reporting information is reported as a new type of uplink control information UCI; or at least one of the first reporting information and the second reporting information is reported as CSI.

22. The method according to any one of claims 1 to 21, wherein the method further comprises:
receiving, by the terminal, configuration information sent by the network-side device, wherein the configuration information is used for configuring at least one of the following:
the terminal selectively performing information reporting; and
a third target uplink resource, wherein the third target uplink resource is at least one of the first target uplink resource and the second target uplink resource, and comprises at least one of a periodic physical uplink control channel PUCCH, a configured grant physical uplink shared channel CG-PUSCH resource, a semi-persistent PUSCH resource, and an aperiodic PUSCH resource.

23. An information reporting method, comprising:
receiving, by a network-side device, first reporting information reported by a terminal based on a first target uplink resource, wherein the first reporting information is triggered for reporting by the terminal, or a first measurement associated with the first reporting information is triggered by the terminal.

24. The method according to claim 23, wherein the first reporting information comprises at least one of the following:
indication information indicating that the terminal triggers reporting;
a first report, wherein the first report comprises at least one of the following: a reference signal index, and a measurement result;
indication information for indicating the network-side device to trigger beam measurement and reporting;
indication information of a downlink reference signal;
indication information for triggering uplink beam measurement;
indication information of an uplink reference signal; and
first information.

25. The method according to claim 23 or 24, wherein the method further comprises:
receiving, by the network-side device, second reporting information reported by the terminal based on a second target uplink resource.

26. The method according to claim 25, wherein the first reporting information comprises at least one of the following:
a first report, wherein the first report comprises at least one of the following: a reference signal index, and a measurement result;
indication information for indicating the network-side device to trigger beam measurement and reporting;
indication information of a downlink reference signal;
indication information for triggering uplink beam measurement;
indication information of an uplink reference signal; and
first information;
or
the second reporting information comprises at least one of the following:
indication information indicating that the terminal triggers reporting;
indication information used for indicating whether the first report exists;
indication information used for indicating a size of the first report;
indication information of the first target uplink resource;
a second report, wherein the second report comprises at least one of the following: a reference signal index, and a measurement result;
indication information for indicating the network-side device to trigger beam measurement and reporting;
indication information of a downlink reference signal;
indication information for triggering uplink beam measurement;
indication information of an uplink reference signal; and
first information.

27. The method according to any one of claims 23 to 26, wherein the method further comprises:
sending, by the network-side device, configuration information to the terminal, wherein the configuration information is used for configuring at least one of the following:
the terminal selectively performing information reporting; and
a third target uplink resource, wherein the third target uplink resource is at least one of the first target uplink resource and the second target uplink resource, and comprises at least one of a periodic physical uplink control channel PUCCH, a configured grant physical uplink shared channel CG-PUSCH resource, a semi-persistent PUSCH resource, and an aperiodic PUSCH resource.

28. An information reporting apparatus, comprising:
a determining module configured to determine a first target uplink resource;
a first reporting module configured to report first reporting information based on the first target uplink resource, wherein the first reporting information is triggered for reporting by a terminal, or a first measurement associated with the first reporting information is triggered by the terminal.

29. The apparatus according to claim 28, wherein the first reporting information comprises at least one of the following:
indication information indicating that the terminal triggers reporting;
a first report, wherein the first report comprises at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information.

30. The apparatus according to claim 28 or 29, wherein the apparatus further comprises:
a second reporting module configured to report second reporting information based on a second target uplink resource.

31. The apparatus according to any one of claims 28 to 30, wherein the apparatus further comprises:
a measurement module configured to, in a case that a second condition is satisfied, perform, for the terminal, the first measurement; and
a third reporting module configured to, in a case that a measurement result of the first measurement satisfies a third condition, report third reporting information related to the measurement result; or in a case that the measurement result of the first measurement does not satisfy the third condition, skip reporting the third reporting information related to the measurement result, or report fourth reporting information, wherein the fourth reporting information comprises at least one of the following:
indication information for triggering downlink beam measurement;
indication information of a downlink reference signal;
indication information for triggering uplink beam measurement; and
indication information of an uplink reference signal.

32. The apparatus according to any one of claims 28 to 31, wherein the apparatus further comprises:
a receiving module configured to receive configuration information sent by the network-side device, wherein the configuration information is used for configuring at least one of the following:
the terminal selectively performing information reporting; and
a third target uplink resource, wherein the third target uplink resource is at least one of the first target uplink resource and the second target uplink resource, and comprises at least one of a periodic physical uplink control channel PUCCH, a configured grant physical uplink shared channel CG-PUSCH resource, a semi-persistent PUSCH resource, and an aperiodic PUSCH resource.

33. An information reporting apparatus, comprising:
a first receiving module configured to receive first reporting information reported by a terminal based on a first target uplink resource, wherein the first reporting information is triggered for reporting by the terminal, or a first measurement associated with the first reporting information is triggered by the terminal.

34. The apparatus according to claim 33, wherein the first reporting information comprises at least one of the following:
indication information indicating that the terminal triggers reporting;
a first report, wherein the first report comprises at least one of the following: a reference signal index, and a measurement result;
indication information for indicating a network-side device to trigger beam measurement and reporting;
indication information of a downlink reference signal;
indication information for triggering uplink beam measurement;
indication information of an uplink reference signal; and
first information.

35. The apparatus according to claim 33 or 34, wherein the apparatus further comprises:
a second receiving module configured to receive second reporting information reported by the terminal based on a second target uplink resource.

36. The apparatus according to any one of claims 33 to 35, wherein the apparatus further comprises:
a sending module configured to send configuration information to the terminal, wherein the configuration information is used for configuring at least one of the following:
the terminal selectively performing information reporting; and
a third target uplink resource, wherein the third target uplink resource is at least one of the first target uplink resource and the second target uplink resource, and comprises at least one of a periodic physical uplink control channel PUCCH, a configured grant physical uplink shared channel CG-PUSCH resource, a semi-persistent PUSCH resource, and an aperiodic PUSCH resource.

37. A terminal, comprising a processor and a memory, wherein the memory stores a program or instructions capable of running on the processor, and the program or instructions, when executed by the processor, implement the steps of the information reporting method according to any one of claims 1 to 22.

38. A network-side device, comprising a processor and a memory, wherein the memory stores a program or instructions capable of running on the processor, and the program or instructions, when executed by the processor, implement the steps of the information reporting method according to any one of claims 23 to 27.

39. A readable storage medium, wherein a program or instructions are stored on the readable storage medium, and the program or instructions, when executed by a processor, implement the steps of the information reporting method according to any one of claims 1 to 22, or implement the steps of the information reporting method according to any one of claims 23 to 27.
